# EUROPÄISCHE PATENTSCHRIFT

(11) **EP 3 721 007 B1**
(45) Veröffentlichungstag und Bekanntmachung des Hinweises auf die Patenterteilung: **30.06.2021**
(21) Anmeldenummer: 20706705.9
(22) Anmeldetag: 20.02.2020
(51) Int. Cl.: D06N 7/00

(54) **TAPETE UND VERFAHREN ZUR BEREITSTELLUNG EINER TAPETE**
WALLPAPER AND METHOD FOR PROVIDING WALLPAPER
PAPIER PEINT ET PROCÉDÉ DE FABRICATION D'UN PAPIER PEINT

(30) Priorität: 22.02.2019 DE 102019104600
(43) Veröffentlichungstag der Anmeldung: 14.10.2020
(73) Patentinhaber: BRAINSTOXX GmbH, 80469 München (DE)
(72) Erfinder: EIBL, Stefan, 80469 München (DE); ZIMMERMANN, Volker, Dr., 86153 Augsburg (DE)
(74) Vertreter: Winter, Brandl - Partnerschaft mbB
(86) Internationale Anmeldenummer: PCT/EP2020/054563
(87) Internationale Veröffentlichungsnummer: WO 2020/169779

(56) Entgegenhaltungen:
- DE-U1-202014 101 364
- DE-U1-202017 004 365
- GB-A- 1 231 990

## Beschreibung

### Technisches Gebiet

Die vorliegende Offenbarung betrifft eine Tapete, insbesondere eine Großtapete sowie ein Verfahren zur Bereitstellung einer Tapete. Weitere Aspekte der Offenbarung betreffen ein Montageset für eine Tapete und ein Montageverfahren für eine Tapete.

### Stand der Technik

Bahnenförmige Tapeten bzw. Wandverkleidungen aus verschiedensten Materialen sind seit langer Zeit bekannt. Solche Tapeten zur Wandverzierung haben allgemein den Nachteil, dass das hierfür notwendige Bahnenkleben aufwendig ist und handwerkliches Geschick erfordert. Zudem ist das restfreie Entfernen von Tapeten oftmals ein aufwendiges Unterfangen, da viele Tapetenmaterialien beim Entfernen einreißen und stückweise auf der zuvor verkleideten Fläche haften bleiben.

Aus diesem Grund wurden im Stand der Technik häufig Versuche unternommen, um Tapeten möglichst vollständig von der Wand lösen zu können. Aus der DE 198 10 508 sowie aus der DE 195 35 407 A1 sind bspw. lösbare Wandverkleidungen bekannt, die mittels Klettbändern an der Wand befestigt werden. Ein Verfahren zum Entfernen von Tapeten durch Befeuchten wird in der Druckschrift DE 43 00 314 beschrieben. Weiterhin sind entfernbare Tapeten bekannt, die auf der wandseitigen Oberfläche bzw. ihrer Rückseite speziell beschichtet sind, um in Kombination mit abgestimmten Kleistern leicht abziehbar zu sein (DE 31 29 003). Die Druckschrift DE 100 34 544 A1 offenbart die Verwendung von speziellen Klebern und/oder einer strukturell speziell beschaffenen wandseitigen Oberflächenbeschichtung zum Bereitstellen einer wiederabziehbaren, bahnenförmigen Tapete.

Die Druckschrift DE 694 03 390 T2 offenbart eine Tapete mit einem Oberflächenmaterial oder Außenmaterial aus Kunststofffilm, z.B. Vinyl, oder Papiermaterial und mit einem Unterlagenstoff aus einem Grundgewebe aus Polyester mit einem eingefügten Schuss aus Baumwolle. Dabei sind das Oberflächenmaterial und Unterlagenstoff sind durch ein geeignetes Klebemittel zur Ausbildung einer mehrschichtigen Tapete miteinander verklebt. Ferner offenbart die Druckschrift DE 20 2007 009 254 U1 einen mehrschichtigen Wand- oder Bodenbelag aus einem bahnartigen Material mit mindestens zwei miteinander verklebten Polyesterfaservliesen und einem dazwischen angeordneten elektrisch leitenden Gittergeflecht zur Abschirmung gegen elektromagnetische Felder und Wellen.

Die Druckschrift DE 10 2015 2004 53 A1 offenbart eine Tapete mit einem flächigen Textilsubstrat, das auf einer Oberfläche eine Beschichtung aufweist, die einen mit Wasser mehrfach aktivierbaren Klebstoff enthält.

Die Druckschrift EP1631638B1 offenbart eine Tapete als ein papierhaltiger Wandbelag mit einer im trockenen Zustand nicht klebrigen, aber mit Wasser aktivierbaren Klebstoffschicht auf ihrer (wandzugewandten) Rückseite. Dieser Druckschrift sind ferner mehrere technische Nachteile eine Tapete mit einer herstellseitig aufgebrachten Klebstoffschicht bzw. Kleistervorbeschichtung auf dem Tapetenrücken zu entnehmen: So sollte die Klebstoffbeschichtung die übliche Produktionsgeschwindigkeit der kontinuierlichen Tapetenfertigung möglichst ebenso wenig beeinträchtigen wie die Rollen-Konfektionierung. Ferner sollte die Klebstoffschicht abriebfest sein und den normalen Tapetentransport ohne Schaden überstehen. Eine geringe Blockneigung im aufgerollten Zustand ist ebenfalls wichtig: Auf keinen Fall sollte die Klebstoffschicht bei der Lagerung im trockenen Zustand klebrig werden. Insofern resultiert im Falle eines wässrig löslichen Klebstoffes in der Klebstoffschicht als ein weiterer Nachteil, dass eine Exposition zur Umgebungsfeuchte während der Lagerung unbedingt zu vermeiden ist.

Die Druckschrift GB 1 231 990 A offenbart eine leicht abziehbare Wandverkleidung mit einer faserigen Trägeroberfläche, die mit einer nicht plastifizierten Mischung von Nitrocelluloseharzen behandelt wurde, um die Anfälligkeit der Wandverkleidung für das Anhaften an der Wand beim anschließenden Aufbringen eines Klebstoffs auf Wasserbasis, der Harzmenge, zu verringern, angewendet im Bereich von 3 g / qm bis 7 g / qm, um die Klebeverbindung zwischen der Wand und der faserigen Trägeroberfläche zu verringern, aber nicht zu beseitigen. Die Harze können in flüssiger Form mit einer diskontinuierlichen, unregelmäßigen oder regelmäßigen Schicht, z. B. einem Mikropunktmuster, aufgetragen werden. Dekorations-, Werbe- oder Lehrmittel können vor oder nach dem Aufbringen der Harze auf die Oberfläche aufgetragen werden, die durch Drucken, Coating, Sprühen, Eintauchen, Tiefdruckwalze, Walzenbeschichtung, Siebdruck mit oder ohne Schablone oder dergleichen aufgebracht werden können.

Die Druckschrift DE 20 2014 101364 U1 offenbart eine dekorative Wand- und / oder Deckenfläche, die gerollt werden kann, insbesondere Tapete, welche mindestens eine Schicht und mindestens eine Luftreinigungskomponente umfasst, dadurch gekennzeichnet, dass die Deckschicht aus einem Textil besteht.

Die Druckschrift DE 20 2017 004 365 U1 offenbart eine dekorative Wandtapete mit einer Vliesschicht als Trägermaterial, wobei die Vliesschicht mit einer Stickerei vorgesehen ist.

Alle diese bislang unternommenen Lösungsansätze resultieren jedoch in einem vergleichsweise aufwendigen, insofern mehrschichtigen, Tapetenaufbau bzw. in einem vergleichsweise aufwendigen Verfahren zur Bereitstellung und Montage einer Tapete oder in vergleichsweise aufwendigen Verfahren zum Entfernen der Tapete.

Ferner wäre es wünschenswert, wenn die entfernte Tapete wiederverwendet werden könnte und erneut an gleicher oder anderer Stelle angebracht werden könnte.

### Offenbarung der Erfindung

Vor dem oben beschriebenen Hintergrund besteht die Aufgabe der vorliegenden Erfindung darin, eine einfach herstellbare Tapete bereitzustellen, die nicht nur leicht von einer Wand lösbar oder abziehbar ist, sondern wiederverwendbar, waschbar und erneut an einer Wand anbringbar ist.

Diese Aufgabe wird durch eine Tapete gemäß Anspruch 1 bzw. ein Bereitstellungsverfahren für eine Tapete gemäß dem auf das Verfahren gerichteten Anspruch gelöst. Vorteilhafte Weiterbildungen sind Gegenstand der Unteransprüche.

Gegenstand der Erfindung ist eine Tapete, die zumindest eine, vorzugsweise ausschließlich eine Grund- oder Trägerschicht aufweist, welche als ein textiles Flächengebilde, insbesondere aus einer Kunstfaser, vorzugsweise ohne eine herstellseitig aufgebrachte Klebstoffbeschichtung ausgebildet ist. Eine der Oberflächen der Grundschicht bildet eine wandseitige Oberfläche der Tapete aus, mit welcher die Tapete auf einer bekleisterten Wand- oder Deckenfläche angebracht oder anbringbar ist. In anderen Worten kann gemäß der Erfindung ein Textil, insbesondere aus einem Kunststoff, das Trägermaterial bzw. Grundmaterial für eine Tapete bilden. Die Tapete ist dazu vorgesehen, an einer unbeschichteten Seite mit der Oberfläche des Grundmaterials direkt an eine Wand- oder Deckenoberfläche verleimt bzw. fixiert zu werden.

Die Anmelderin hat überraschend festgestellt, dass durch die Verwendung eines Textils, insbesondere aus einer Kunstfaser bzw. Synthetikgarn, als einziges Grundmaterial für eine Tapete, die Tapete ohne spezielle Behandlung oder Beschichtung der wandseitigen Oberfläche bzw. Fläche mittels (handelsüblichem) Tapetenkleister gut an einer Wand- oder Deckenfläche haften bleibt und dennoch leicht abzuziehen ist.

Dabei kommt die Struktur des Textils zum Tragen, die im Gegensatz zu Papier-, Raufaser-, oder vergleichbaren Tapeten luftdurchlässig und mit kleinen Lücken versehen ist, was die effektiv mit einer Wand haftende Fläche an der wandseitigen Oberfläche reduziert. Durch Verwendung eines Textils kann die Tapete darüber hinaus nach dem Entfernen, bspw. in einer handelsüblichen Waschmaschine, insbesondere unter der Verwendung von Feinwaschmittel bei 30°C bzw. 40 C, gewaschen werden und bei Bedarf wieder an einer Wand angebracht werden. Somit ist die erfindungsgemäße Tapete nicht nur rückstandslos abziehbar, sondern auch waschbar und mehrfach wiederverwendbar. Im Gegensatz zu einer gewöhnlichen Papiertapete hat die erfindungsgemäße Tapete eine wesentlich höhere Reißfestigkeit, so dass diese in einem Stück von der Wand abgezogen werden kann.

Unter dem Begriff Tapetenkleister soll im Rahmen der vorliegenden Erfindung insbesondere ein Klebstoff aus der Klebstoffgruppe der Dispersionsklebstoffe verstanden sein. Bei Dispersionsklebstoffen dient Wasser (zumeist) und/oder ein, vorzugsweise hydrophiles, Lösungsmittel, als Flüssig-Phase, in der zumindest ein Klebstoffpolymeres, vorzugsweise zumindest zwei Klebstoffpolymere als unterschiedliche Klebstoffkomponenten, als Fest(stoff)-Phase dispergiert bzw. als disperse Feststoff-Partikeln vorliegen. Unter einer Dispersion ist allgemein eine feinste Verteilung einer festen Substanz bzw. Fest(stoff)-Phase in einer Flüssig-Phase zu verstehen. Sprich, es handelt sich um ein Mehrphasensystem (bzw. Fest-flüssig-Zweiphasensystem), wobei das Dispersionsmittel als äußere, durchgehende (kohärente) Flüssig-Phase und die disperse Phase als innere, verteilte (inkohärente) Feststoff-Phase bzw. als disperse Feststoff-Partikeln vorliegen. Auf Grund der Größe der dispersen Feststoff-Partikeln aus dem zumindest einen Klebstoffpolymeren [Teilchengröße 500 nm (feindispers) und/oder 500 - 2000 nm (mitteldispers) und/oder größer 2000 nm (grobdispers)] und/oder mithilfe von zumindest einem Zusatzstoff (Stabilisator, Emulgator, usw.) scheiden sich diese nicht ab (sedimentieren nicht). Bevorzugte Feststoff-Gehalte liegen im Bereich von 40 - 70 Vol.-%.

Das Abbinden des Tapetenkleisters als Dispersionsklebstoff wird durch das Entfernen der Flüssig-Phase, vorzugsweise des Wassers, nach dem Aufbringen des Tapetenkleisters auf die Grundschicht bzw. das textile Flächengebilde der Tapete eingeleitet. Beim Einsatz des Dispersionsklebstoffes bzw. Tapetenkleisters ist vorliegend wesentlich, dass die Flüssig-Phase durch die Grundschicht bzw. das textile Flächengebilde entweichen können muss. Mit anderen Worten, die Grundschicht bzw. das textile Flächengebilde ist für die Flüssigphase, insbesondere für Wasser bzw. Feuchte, des Tapetenkleisters durchlässig ausgebildet.

In einer Klebefuge, die sich zwischen der (ggf. einerseits bekleisterten) wandseitigen Oberfläche der Tapete und der (ggf. andererseits, d.h. alternativ oder kumulativ, bekleisterten) Wand- oder Deckenfläche ausbildet, bleiben mit dem Entweichen der Flüssig-Phase durch die Grundschicht bzw. das textile Flächengebilde die Klebstoffpolymere übrig. Diese bilden auf der wandseitigen Oberfläche der Tapete eine Klebeschicht aus bzw. verschmelzen zu einer solchen (Filmbildung). Dabei bewirkt die ausgebildete Klebeschicht im getrockneten bzw. abgebundenen Zustand, dass die erfindungsgemäße Tapete an der Wand- oder Deckenfläche (bis zum Zeitpunkt des gewünschten Ablösens bzw. Entfernens der Tapete) zuverlässig haftet. Vorliegend ist die Verbindung der an der Grundschicht bzw. dem textilen Flächengebilde ausgebildeten und im getrockneten bzw. abgebundenen Zustand vorliegenden Klebeschicht zu der Grundschicht bzw. dem textilen Flächengebilde so stark ausgebildet, dass die Tapete erfindungsgemäß lösbar, insbesondere weitgehend rückstandsfrei lösbar, an der Wand- oder Deckenfläche anbringbar ist. Das (trockene) (Ab-)Lösen bzw. Herunterziehen der Tapete von der Wand- oder Deckenfläche kann erfolgen, indem beispielsweise eine (manuelle) Zugkraft und/oder Scherkraft von einer Ecke und/oder Seite und/oder Kante der Tapete ausgehend ausgeübt wird.

Dabei weist die Grundschicht bzw. das textile Flächengebilde aufgrund ihrer starken inneren Struktur insbesondere den Vorteil auf, integral und/oder rückstandsfrei von der Wand- oder Deckenfläche (ab)lösbar zu sein. Dahingegen erweist sich eine herkömmliche Papiertapete, die aus einer Vielzahl kurzer Fasern pflanzlicher Herkunft durch Entwässerung einer Fasersuspension auf einem Sieb in Form einer komprimierten Vliesstruktur ausgebildet wird, als nicht (zerstörungsfrei) (ab)lösbar.

Vorzugsweise kann ein Tapetenkleister basierend auf Zellulose und Stärke mit Anteilen an Kunstharz verwendet werden.

Insbesondere betrifft vorliegend der Begriff des Tapetenkleisters eine teilchenförmige Bindemittelzusammensetzung, mindestens enthaltend ein natürliches oder synthetisches Polysaccharid und mindestens ein synthetisches wasserdispergierbares Polymerisat. Polyvinylacetat, Acrylate, Kautschuke, Polyurethane und Polychloropren sind wichtige Basen für Dispersionsklebstoffe. Solche teilchenförmigen Bindemittelzusammensetzungen sind beispielsweise in der WO 02/48276 A1 und der DE 101 57 485 A1 offenbart. Dabei wird deren Offenbarung, zur Vermeidung von Wiederholungen, durch Verweis explizit in die vorliegende Offenbarung miteinbezogen.

Ein erheblicher Vorteil eines vorliegend bevorzugten Tapetenkleisters, der als Dispersionsklebstoff auf Basis von Wasser als äußerer Flüssig-Phase vorgesehen ist, zusätzlich zu dem Aspekt der kostengünstigen Verfügbarkeit, ist darin zu sehen, dass er weitgehend emissionsfrei zusammengesetzt ist bzw. toxisch unbedenklich durch Abtrocknen abbindet.

Gemäß der Erfindung ist in die textile Grundschicht ein Muster kleiner bzw. kleinster Löcher eingearbeitet sein. Auf diese Weise lässt sich die effektiv haftende Fläche im Haftverbund reduzieren, wodurch sich eine gute Abziehbarkeit der Tapete auch im trockenen Zustand ergibt. Auf vorteilhafte Weise können die Löcher eine Fläche von 0,2 bis 2 mm², vorzugweise 0,3 bis 0,8 mm², aufweisen. Das Lochmuster ist ein gleichmäßiges bzw. homogenes Muster, um eine gute Bedruckbarkeit bereitzustellen.

Dabei liegt ein weiterer Vorteil dieser vorstehend beschriebenen löcherigen Struktur bzw. einer Porenstruktur der Grundschicht bzw. des textilen Flächengebildes darin, dass der Tapetenkleister auch von deren wandabgewandter Vorderseite der Tapete aufgetragen, bspw. aufgepinselt und/oder mit einer Auftragerolle aufgebracht, werden kann. Insofern kann vorzugsweise der frisch aufgetragene Tapetenkleister in eine löcherige Struktur bzw. eine Porenstruktur der Grundschicht bzw. des textilen Flächengebildes hineinbenetzen. Sodann kann der noch flüssige Tapetenkleister auf die jenseits der Grundschicht angeordnete Wand- oder Deckenfläche aufspreiten. Dabei wird eine Klebefuge zwischen der wandseitigen (Ober-)Fläche der Grundschicht und der Wand- oder Deckenfläche ausgebildet.

Weiterhin ist hinsichtlich der löcherigen Struktur bzw. der Porenstruktur der Grundschicht bzw. des textilen Flächengebildes als vorteilhaft zu sehen, dass diese das gleichmäßige Abtrocknen eines wässrigen Anteils und/oder Lösungsmittels des Tapetenkleisters, vorzugsweise Dispersionsklebstoffes, von der Wand- oder Deckenfläche in die Umgebungsluft zusätzlich befördert.

Zu dieser technischen Wirkweise ist ferner bekannt, dass sich der Trocknungsvorgang gemäß einem ersten Trocknungsabschnitt, sodann einem zweiten Trocknungsabschnitt und zuletzt einem dritten Trocknungsabschnitt vollzieht. Dabei tritt der erste Trocknungsabschnitt am Anfang der Trocknung auf. Wenn bzw. solange die wandabgewandte Vorderseite der Tapete nass von dem wässrigen Anteil und/oder Lösungsmittel des Tapetenkleisters ist, entspricht das Trocknungsverhalten im Wesentlichen dem einer (reinen) Flüssigkeitsoberfläche. Dabei findet in der löcherigen Struktur bzw. der Porenstruktur insbesondere eine sich vorteilhaft auf die Trocknungsgeschwindigkeit auswirkende kapillare Flüssigkeitsleitung statt. Das Trocknungsverhalten ist anhand der bekannten grenzflächenphysikalischen Grundlagen bzw. Gleichungen nach Young (Benetzungswinkel), Washburn-Rideal (Kinetik), Laplace (Kapillardruck), et.al. modellierbar. Im nachfolgenden zweiten Trocknungsabschnitt bildet sich, beginnend bzw. ausgehend von der wandabgewandten Vorderseite der Tapete, eine (bereits) trockene Zone, aus. Mit anderen Worten, kann darauf mit der Modellvorstellung eines in Richtung hin zu der Wand- oder Deckenfläche wandernden Trocknungsspiegels Bezug genommen werden. Da dabei in bereits getrockneten Bereichen der Diffusionskoeffizient für den Dampftransport sehr gering ist, verringert sich die Trocknungsgeschwindigkeit über die Zeit. Vor dem Übergang zu dem letzten bzw. dritten Trocknungsabschnitt ist der letzte Tropfen vom wässrigen Anteil und/oder Lösungsmittel des Tapetenkleisters, der sich einerseits in der löcherigen Struktur bzw. der Porenstruktur der Grundschicht bzw. des textilen Flächengebildes verdunstet. Sprich, das Ende des zweiten Trocknungsabschnittes entspricht, in erster Näherung, einem getrockneten bzw. abgebundenen Zustand des Tapetenkleisters. Danach nimmt das, die Tapete mit dem Tapetenkleister umfassende, Gesamtsystem in einem langsamen, da diffusionskontrollierten, Prozess die sorptive Gleichgewichtsfeuchte zur Umgebungsluft an.

Dabei liegt ein noch weiterer Vorteil der vorstehend beschriebenen bevorzugten Ausführungsform mit der löcherigen Struktur bzw. der Porenstruktur der Grundschicht bzw. des textilen Flächengebildes darin, dass durch diese ein Überschuss an (noch flüssigem) Tapetenkleister zur wandabgewandten Vorderseite der Tapete abgeführt werden kann. Somit kann ein solcher Überschuss, beispielsweise mittels eines Abziehers mit einer Gummilippe, gleichmäßig nach Aufbringen der Tapete an die Wand- oder Deckenfläche abgezogen bzw. entfernt werden. Gemäß der Veranschaulichung des Trocknungsverhaltens verkürzt sich dadurch insbesondere der erste Trocknungsabschnitt und damit die Gesamttrocknungszeit vorteilhaft. Zudem wirkt sich dies auf die Gleichmäßigkeit der Tapetenanbringung in deren Fläche aus, was als Qualitätsmerkmal des Endresultates nicht zuletzt auch optisch seitens des Nutzers wahrnehmbar ist. Noch weiter bewirkt dies vorteilhaft eine reduzierte Höhe der sich zwischen der Grundschicht und der Wand- oder Deckenfläche ausbildenden Klebefuge, was sich gemäß Grundsätzen der Klebetechnik verstärkend auf das Adhäsionsverhalten bzw. die Gesamtfestigkeit der Klebeverbindung der Tapete zu der Wand- oder Deckenfläche auswirkt.

Ein noch weiterer, zusätzlicher Vorteil der vorstehend beschriebenen bevorzugten Ausführungsform mit der löcherigen Struktur bzw. der Porenstruktur der Grundschicht bzw. des textilen Flächengebildes ist in einer Verstärkung des erfindungsgemäß gewünschten Effektes einer (trockenen) Ablösbarkeit der Tapete zu sehen. Denn die an der Grundschicht bzw. dem textilen Flächengebilde wandseitig ausgebildete und im getrockneten bzw. abgebundenen Zustand vorliegende Klebeschicht ist aufgrund ihrer Hinterschneidungen mit der löcherigen Struktur bzw. der Porenstruktur der Grundschicht bzw. des textilen Flächengebildes innig verbunden und/oder integral und/oder formschlüssig verbunden ausgebildet. Mit anderen Worten hängt die Klebeschicht, im Falle der bevorzugt löcherigen Struktur bzw. der Porenstruktur der Grundschicht bzw. des textilen Flächengebildes, nicht nur adhäsiv an der Grundschicht bzw. des textilen Flächengebildes, sondern auch noch formschlüssig zusammen mit dieser. Sprich, es bildet sich im abgebundenen Zustand des Tapetenkleisters eine, vorzugsweise in Teilen formschlüssige, Grundschicht-Tapetenkleister-Struktur als Feststoff-Feststoff-Struktur aus. Infolgedessen wird beim Ablösen der Tapete zusammen mit der löchrigen Grundschicht auch die Klebeschicht verstärkt mit abgezogen, zumindest größtenteils, wenn nicht sogar vollständig.

Gemäß einer bevorzugten Ausführungsform der Erfindung kann die Grundschicht ein Textil mit zumindest 50% Polyesteranteil, bevorzugt zumindest 70% Polyesteranteil, besonders bevorzugt 100% Polyesteranteil sein. Polyester bietet einen guten Kompromiss aus einer ausreichend hohen Haftfestigkeit für eine zuverlässige Montage der Tapete in Verbindung mit Tapetenkleistern und einer leichten und restlosen Ablösbarkeit der Tapete. Ferner ist Polyester als ein bedruckbares Textil, insbesondere als ein Fahnenstoff und/oder eine textile Wandbespannung, usw., in gleichmäßiger Qualität herstellbar bzw. kostengünstig verfügbar. Polyester weist eine vorteilhaft hohe Bruchfestigkeit von 1000 - 1300 N/mm² auf (gegenüber bspw. Baumwolle zum Vergleich: 350-700 N/mm²). Dabei beträgt die Bruchdehnung von Polyester 10 - 18 %. Des Weiteren weist Polyester ein vorteilhaft hohes Elastizitätsmodul von 10000 - 15000 N/mm² auf (gegenüber bspw. Baumwolle zum Vergleich: 4500 - 9000 N/mm²).

Die Erfindung ist jedoch nicht auf Polyester beschränkt; so kommen, neben natürlichen Polymeren, vorzugsweise synthetische Polymere in Betracht, insbesondere umfassend Polyamid und/oder Polyacryl und/oder Polypropylen. Diese haben den Vorteil ähnlicher Spinnbarkeits-, Benetzungs- sowie Reißfestigkeitseigenschaften. Insbesondere können funktionale Polymere bzw. Polymerbestandteile umfasst sein.

Gemäß einer bevorzugten Ausführungsform in einer ersten Variante kann die Grundschicht bzw. das textile Flächengebilde eine Maschenware, bevorzugt ein Gewirke, sein. Gemäß einer alternativ bevorzugten Ausführungsform in einer zweiten Variante kann die Grundschicht bzw. das textile Flächengebilde ein Non-Woven, vorzugsweise ein Gelege, noch weiter bevorzugt kreuzlaminiertes Gelege, sein. Gemäß einer weiteren alternativ bevorzugten Ausführungsform in einer dritten Variante kann die Grundschicht bzw. das textile Flächengebilde als eine, vorzugsweise nähgewebte, Webware ausgebildet sein. Dabei kann weiter vorzugsweise die Webware in einer Leinwandbindung, insbesondere Panamabindung, und/oder in einer Köperbindung und/oder in einer Atlasbindung und/oder als Gittergewebe ausgebildet sein. Durch die spezifische Auswahl der bevorzugten Variante kann das anwendungstechnische, insbesondere das mechanische Verhalten der Grundschicht bzw. des textilen Flächengebildes, insbesondere die Dimensionsstabilität, präzise eingestellt werden. Somit lassen sich anwendungstechnisch relevante Eigenschaften, beispielsweise die Dichte, Porenstruktur, Reißfestigkeit, Robustheit usw., sowie weiterhin bzw. gegebenenfalls drucktechnisch relevante Eigenschaften, beispielsweise die Oberflächenrauigkeit, die Benetzbarkeit bzw. Durchnetzbarkeit mit Druckfarben, usw., auf herstelltechnisch einfache Weise beeinflussen und gezielt einstellen.

Als Maschenware werden textile Flächengebilde oder textile Raumgebilde bezeichnet, bei denen eine mittels eines Fadens bzw. Garns gebildete Schleife in eine andere Schleife hineingeschlungen ist. Die auf diese Weise entstehenden Maschen können unter Verwendung eines (Garn-)Fadens oder mehrerer (Garn-)Fäden gebildet werden. Der Vorteil des Einsatzes von Maschenware gegenüber bspw. einem Gewebe oder Flies liegt in der durch die Maschenstruktur bereitgestellten Elastizität, die die Abzieheigenschaften verbessert, und in der Knitterfestigkeit, was die Wiederverwendbarkeit der Tapete verbessert. Zudem lassen sich in eine Maschenware besonders einfach Lochmuster integrieren bzw. sind meist schon Lücken durch die Maschen ausgebildet.

Besonders bevorzugt kann die Grundschicht aus einem Gewirk bestehen. Ein wesentlicher Vorteil von gewirkten Stoffen liegt in ihrer vergleichsweise großen Elastizität sowie hoher Festigkeit bei geringem Gewicht. Der Vorteil der Wirkware gegenüber Strickware liegt zudem darin, dass sie weitgehend laufmaschenfest ist und sich somit beim Abziehen der Tapete robuster verhält. Zudem ist das Verhältnis von Elastizität und Festigkeit bei Gewirken besonders gut für die Anwendung als Tapete geeignet. Bei zu hoher Elastizität (bzw. zu geringem Elastizitätsmodul) kann es beim Fixieren leicht zum Verzerren von Motiven auf der Tapete kommen.

Besonders bevorzugt kann es sich um ein nicht vollflächiges Gewirk handeln, d.h. jede Maschenreihe des Gewirks kann mit beabstandeten Löchern versehen sein. Weiter bevorzugt können die Löcher benachbarter Maschenreihen zueinander versetzt angeordnet sein.

Weiter vorzugsweise ist die Maschenware, bevorzugt das Gewirke, mit einer Stäbchenmasche ausgebildet. Als Maschenwaren werden diejenigen textilen Flächengebilde bzw. Grundschichten bezeichnet, bei denen die Einzelfäden bzw. Filamente mit Hilfe maschenbildender Technologien zu einem dimensionsstabilen Gebilde verarbeitet werden. Dadurch ergibt sich eine besonders vorteilhafte Dimensionsstabilität beim Anbringen der erfindungsgemäßen Tapete auf die Wand-oder Deckenfläche. Dabei können die Maschenwaren als ein 1-Faden-Gewirk und/oder -Gestrick und/oder als ein Kettengewirk ausgebildet sein. Bei dem 1-Fadengewirk bzw. dem 1-Fadengestrick werden durch jeweils einen Faden in Querrichtung nebeneinander liegende Maschen erzeugt. Bei dem Kettengewirk verläuft der Faden in Längsrichtung durch das Gewirke. Alternativ oder kumulativ ist es bevorzugt, dass die Maschenware im 1-Faden-System oder 2-Faden-System oder 3-Faden-System ausgebildet ist. Durch die Auswahl des Fadensystems lassen sich anwendungstechnisch relevante Eigenschaften, beispielsweise die Dichte, Porenstruktur, Reißfestigkeit, Robustheit usw., der Maschenware, gezielt einstellen. Weiterhin bzw. gegebenenfalls sind dadurch drucktechnisch relevante Eigenschaften, beispielsweise die Oberflächenrauigkeit, die Benetzbarkeit bzw. Durchnetzbarkeit mit Druckfarben, usw., auf herstelltechnisch einfache Weise beeinflussbar.

Alternativ oder kumulativ kann ein Nähgewirk bevorzugt sein. Unter Nähgewirken versteht man ein nach dem Prinzip eines Fadengeleges aus Kett- und Schussfäden aufgebautes Fadensystem, das mit Hilfe eines komplizierten Mechanismus flächig vernäht wird. Vorzugsweise können Nähgewebe in ihrem mechanischen Verhalten durch eine geradlinige Lage von Kett- und Schussfäden charakterisiert sein (bspw. als "Malimo" bezeichnete Textilien). Nähgewirke sind in vorteilhafter Weise besonders dimensionsstabil. Sie weisen vorteilhaft bei einer Zugbeanspruchung die mechanischen Eigenschaften der Einzelfäden auf, also ohne eine Interaktion zwischen den beiden Fadenrichtungen. Mit anderen Worten weisen Nähgewirke den Vorteil eines in Kett- und Schussrichtung gleichartigen Kraft-Verformungsverhaltens auf.

Der wesentliche Vorteil eine solchen Gewirks in der Verwendung als Tapetengrundstruktur bzw. -grundschicht ist, dass es neben der Haftungsreduktion durch das Lochmuster aufgrund seiner Homogenität sowie seiner Struktur auf hervorragende Weise auch für das Digitaldruckverfahren geeignet ist. Dadurch können auf einer, später von der wandseitigen Oberfläche abgewandten, Seite der Tapete Bedruckungen erstellt werden, die eine sehr hohe Qualität und Einheitlichkeit der Darstellung aufweisen.

Im Rahmen der vorliegenden Erfindung hat sich gezeigt, dass sich beispielsweise folgende technische Qualitäten von Polyester-Wirkwaren als die Grundschicht für die erfindungsgemäße Tapete eignen: Zum einen seitens des Textilherstellers "Georg+Otto Friedrich GmbH" (Groß-Zimmern, Deutschland) unter den Typenbezeichnungen "StandardFlag KFL / 6043KFL", "Jetflag GS / 6144GS" bzw. "7137KGFS". Zum anderen seitens des Textilherstellers "Gebrüder Aurich GmbH" (Radevormwald, Deutschland) unter den Typenbezeichnungen "Nr. 386" (3-Fadensystem) bzw. "Nr. 254" (2-Fadensystem) bzw. "Nr. 261" (2-Fadensystem; dichte Struktur durch texturierten Fadeneinsatz). Insbesondere zeichnen sich diese Polyester-Wirkwaren als die Grundschicht durch eine vollständige Ablösbarkeit aus. Sprich, ohne dass ein Rückstand auf der Wand- oder Deckenfläche zurückbleibt. Dabei zerreißen die bevorzugten Wirkwaren nicht nur nicht, sondern lassen sich ohne Ausfasern ablösen. Damit weisen sie den Vorteil auf, nicht nur keine Stücke der Tapete, sondern auch keine einzelnen aus der Grundschicht herausgezogenen Filamente bzw. Filamentstücke zu hinterlassen. Weiter vorteilhaft ermöglicht dies eine exzellente Wiederverwendbarkeit, insbesondere nach Auswaschen des Tapetenkleisters. Das stellt unter Kosten- sowie Umweltschutzgesichtspunkten einen erheblichen Vorteil dar, u.a. im Einsatzbereich des Messebaus und bei sonstigen Anwendungen mit schnelllebigen Dekorationszyklen wie für bspw. Hotels.

Vorzugsweise kann die Grundschicht als ein Non-Woven (bzw. nicht-gewebtes textiles Flächengebilde) ausgebildet sein. Dabei kann es sich vorzugsweise um ein Gelege handeln. Noch weiter bevorzugt ist ein kreuzlaminiertes Gelege. Letzteres wird beispielsweise durch den Textilhersteller "JX Nippon ANCI", Teil der japanischen Gruppe "JXTG", unter der Typenbezeichnung "Cross Laminated CLAF® Fabric" mittels Kreuzlaminierungstechnologie hergestellt. Dies ermöglicht robuste, gewichtsoptimierte Grundschichten, insbesondere auch auf Basis von recycelbaren Monomaterial-Polymeren.

Vorzugsweise kann die Grundschicht als eine, vorzugsweise nähgewebte, Webware ausgebildet sein. Dabei kann es weiter bevorzugt sein, dass die Webware in einer Leinwandbindung, insbesondere Panamabindung, und/oder in einer Köperbindung und/oder in einer Atlasbindung ausgebildet ist. Im Rahmen der vorliegenden Erfindung hat sich gezeigt, dass sich beispielsweise folgende technische Qualitäten von Polyester-Webwaren als die Grundschicht für die erfindungsgemäße Tapete eignen: seitens des Textilherstellers "Gebrüder Aurich GmbH" (Radevormwald, Deutschland) unter den Typenbezeichnungen "Nr. 637" bzw. "Nr. 624" vertrieben.

Alternativ oder kumulativ ist die Webware als ein Gittergewebe ausgebildet. Insbesondere Gittergewebe haben den Vorteil, dass sie einen besonders hohen inneren Leervolumenanteil bei gleichzeitig hoher Festigkeit der Grundschicht aufweisen können. Dabei ist vorteilhaft, dass der Tapetenkleister besonders gut gleichmäßig benetzen und die Grundschicht gleichmäßig durchdringen kann.

Bei einer bevorzugten Ausführungsform der Erfindung ist es besonders von Vorteil, dass die Abstände der Löcher zueinander im Wesentlichen identisch sind, weil dadurch die Einheitlichkeit des Druckbildes bei Digitaldruck verbessert wird. Hintergrund ist der Umstand, dass somit im Gewirk ein identischer maximaler Abstand zum nächsten Loch vorhanden ist, so dass eine gute und gleichmäßige Verteilung der Druckfarben garantiert ist. Auf vorteilhafte Weise können die Löcher für eine gute Bedruckbarkeit eine Fläche von 0,2 bis 2 mm², vorzugweise 0,4 bis 0,8 mm², aufweisen.

Vorzugsweise ist die Grundschicht dimensionsstabil. Insbesondere ist es bevorzugt, dass Grundschicht auch dann dimensionsstabil ist, wenn sie bzw. das textile Flächengebilde bzw. die Tapete sich in einem Zustand befindet, in dem sie durch den in einem flüssigen bzw. nicht-abgebundenen Tapetenkleister benetzt ist. So ist es besonders vorteilhaft, wenn aufgrund einer bestehenden Dimensionsstabilität im eingekleisterten Zustand eine (manuelle) Verschiebbarkeit der noch feuchten Tapete gegeben ist. Dies ist anwendungstechnisch für den tapezierenden Anwender bzw. Handwerker wichtig, um die Tapete noch akkurat an der Wand verschieben und ausrichten bzw. entlang Kanten der Tapete einen optischen nahtlosen Übergang eines aufgedruckten Musters adjustieren zu können.

Vorzugsweise ist die Grundschicht nicht-quellend hinsichtlich Wasser und/oder hinsichtlich des in dem flüssigen bzw. nicht-abgebundenen Zustand befindlichen Tapetenkleisters. Daraus ergibt sich ein besonderer Vorteil gegenüber einer herkömmlichen Papiertapete, die implizit eine Quellzeit vorab dem eigentlichen Aufbringen der Tapete auf die Wand-oder Deckenfläche erfordert, was die Geschwindigkeit des handwerklichen Tapeziervorgangs erheblich beeinträchtigt sowie höhere Anforderungen an die Geschicklichkeit des ausführenden Anwenders bzw. Handwerkers stellt. Ferner besteht bei einer vorzugsweise nicht-quellenden Grundschicht der technische Vorteil, dass die Tapete, insbesondere ein Dekor der Tapete, nicht einem Maßverzug negativ unterliegt. Des Weiteren ist die Abbindezeit des Tapetenkleisters vorteilhaft beschleunigt, sodass ein Raum mit einer frisch tapezierten Wand schneller wieder verfügbar ist.

Vorzugsweise weist die Grundschicht einen längs-bestimmbaren ersten Dehnungswert bei 100 N und/oder einen quer-bestimmbaren Dehnungswert bei 100 N auf, der kleinergleich 25 %, vorzugsweise kleinergleich 15 % und insbesondere kleinergleich 7 % beträgt. Daraus ergibt sich der Vorteil einer besonders hohen, insbesondere bevorzugt in beiden Richtungen (längs, quer) gleichmäßigen, Dimensionsstabilität bei Einwirkung von mechanischen Belastungen auf die Tapete. Ferner weist dieses Dehnungsverhalten den Vorteil einer besonders guten Maschinengängigkeit auf Druckmaschinen, insbesondere bei Rollenware mit hohen Druckgeschwindigkeiten, auf.

Vorzugsweise weist die Grundschicht und/oder ein textiler Garnfaden der Grundschicht und/oder ein einzelnes textiles Filament der Grundschicht eine Zug-und/oder Reißfestigkeit größer 800 MPa, besonders größer 1.500 MPa und insbesondere bevorzugt größer 3.000 Mpa, auf. Dadurch wird vorteilhaft die vollständige (Ab-)Lösbarkeit, insbesondere ohne Ausfransen, unterstützt.

Vorzugsweise ist die Grundschicht in einem getrockneten bzw. abgebundenen Zustand des Tapetenkleisters der auf der Wand- oder Deckenfläche angebrachten Tapete, nahezu oder vollständig, rückstandsfrei von der Wand- oder Deckenfläche (ab-)lösbar. Dabei beträgt weiter bevorzugt ein Flächenanteil von einem nicht ablösbaren Rückstand des Tapetenkleisters und/oder der Grundschicht kleinergleich 15 %, besonders bevorzugt kleinergleich 7 % und insbesondere bevorzugt kleinergleich 3 %. Alternativ oder kumulativ ist der nicht ablösbare Rückstand mit Wasser und/oder einem hydrophilen Lösemittel und/oder einer tensidischen Waschzusammensetzung abwaschbar. Alternativ oder kumulativ beträgt eine parallel zu der, vorzugsweise planen, Wand- oder Deckenfläche zum Ablösen auf die Grundschicht ausgeübte (erforderliche und/oder maximale) Zugkraft kleinergleich 80 N, vorzugsweise kleinergleich 70 N und insbesondere zwischen 35 und 67 N. Dies ermöglicht dem Anwender eine konveniente Wiederbereitstellung der Wand- oder Deckenfläche ohne jegliche bzw. mit nur geringfügiger Nacharbeit. Dies ist beispielsweise im Rahmen eines Umzugs mit der Notwendigkeit einer Übergabe der Wand- oder Deckenfläche in deren Urzustand von Vorteil.

Vorzugsweise weist die Grundschicht einen inneren Leervolumenanteil zwischen 2 % und 90 %, vorzugsweise zwischen 5 % und 85 %, besonders bevorzugt zwischen 10 % und 80 % und insbesondere bevorzugt zwischen 20 % und 60 % auf. Damit kann der Tapetenkleister besonders gut die Grundschicht benetzen und durch Formschluss mit der Grundschicht eine zusammenhängende Struktur ausbilden. Dadurch sind einerseits die ausreichend gute Haftung und andererseits die vollständige (Ab-)Lösbarkeit positiv befördert.

Vorzugsweise gilt: Eine erste Benetzbarkeit durch Wasser und/oder durch ein hydrophiles Lösungsmittel des Tapetenkleisters auf die Wand- oder Deckenfläche ist besser als auf die Grundschicht; und eine zweite Benetzbarkeit durch einen dispersen Anteil des Tapetenkleisters auf die Grundschicht ist besser als auf die Wand- oder Deckenfläche. Dies kann so insbesondere in dem durch den in dem flüssigen bzw. nicht-abgebundenen Zustand befindlichen Tapetenkleister benetzten Zustand der Tapete zutreffen.

Dabei erweist sich der vorteilhafte Effekt, dass im Zuge eines ggf. Trocknungsvorganges zum Abbinden die vorzugsweise polymeren Anteile des Tapetenkleisters, vorzugsweise Dispersionsklebstoffes, die vorzugsweise polymere Grundschicht stärker als die hydrophile Wand- oder Deckenfläche (beispielsweise aus Beton, Gips, mineralisch verputzt und dergleichen) benetzen. Aufgrund dessen konzentriert sich der Tapetenkleister während des Abbindeprozesses, auf (grenzflächen)physikalischer und/oder chemikalischer Betrachtungsebene, tendenziell stärker zu der, vergleichsweise hydrophoberen, Grundschicht stärker als zu der hydrophilen Wand- oder Deckenfläche. Das bewirkt bzw. unterstützt die (Ab-)Lösbarkeit der Tapete im abgebundenen Zustand (idealerweise rückstandsfreie (Ab-)Lösbarkeit: ohne Reste der Grundschicht).

Darüber hinaus bewirkt die zuvor beschriebene höhere Benetzungsaffinität der polymeren Anteile des Tapetenkleisters zu der zu der, vergleichsweise hydrophoberen, Grundschicht vorteilhaft, dass beim (Ab-)Lösen der Tapete im Sinne des Ablösens der Grundschicht möglichst wenig in Form von Resten bzw. Fragmenten des Tapetenkleisters ausgebildete Rückstände auf der Wand- oder Deckenfläche verbleiben.

Alternativ oder kumulativ ist bzw. sind die erste und/oder zweite Benetzbarkeit ausgebildet, so dass eine Höhe einer Klebefuge des Tapetenkleisters, welche sich in dem flüssigen bzw. nicht-abgebundenen Zustand zwischen der Grundschicht und der Wand- oder Deckenfläche ausbildet, kleinergleich 100 nm, vorzugsweise kleinergleich 10 nm und insbesondere ca. 1 nm beträgt. Damit erhöht sich der Klebeverbund vorteilhaft, so dass die Tapete langzeitstabil an der Wand- oder Deckenfläche haftet.

Vorzugsweise ist der Tapetenkleister als hinsichtlich einer Viskosität und/oder eines Verarbeitungsfensters des Tapetenkleisters stabilisiertes Flüssigprodukt vorgesehen. Ein solcher ist beispielsweise in der Druckschrift EP 2 432 828 B1 offenbart. Dabei wird deren Offenbarung, zur Vermeidung von Wiederholungen, durch Verweis explizit in die vorliegende Offenbarung miteinbezogen. Beispielsweise ist ein flüssiger Tapetenkleister seitens der Firma Henkel KGaA (Holthausen, Deutschland) unter der Typenbezeichnung "Metylan Spezialkleister" verfügbar. Dabei ist von Vorteil, dass der Tapetenkleister hinsichtlich seiner Viskosität bereits stabilisiert formuliert eingesetzt wird. Damit entfällt ein potentiell qualitätsmindernder Einfluss eines ansonsten nach einem (etwaig falschen) Anmischen bzw. Anrühren einer trockenen Klebstoffzusammensetzung zeitlich veränderlichen Vikositätsaufbaus des Tapetenkleisters auf die Benetzung der Grundschicht bzw. des textilen Flächengebildes. Ferner ist mittels der speziellen Formulierung ein Verarbeitungsfenster positiv für den Anwender verlängert. Insgesamt verbessert sich die handwerkliche Anwendung als solche sowie die Qualitätssicherheit des für die Tapete zu erzielenden Ergebnisses.

Vorzugsweise hat (bzw. weist auf) die Grundschicht eine Oberflächenspannung zwischen 18 und 55 mN/m, vorzugsweise zwischen 25 und 50 mN/m, besonders bevorzugt zwischen 28 und 40 mN/m und insbesondere bevorzugt bei ca. 30 mN/m. Dadurch ist die (dynamische und/oder statische) Benetzbarkeit (gemäß einem Benetzungswinkel bzw. Randwinkel) und/oder die Adhäsion des Tapetenkleisters bzw. zumindest eines polymeren Klebstoffanteils davon auf die (bzw. in die; bzw. zu der) Grundschicht weiter verbessert. Dies befördert die rückstandsfreie (Ab-)Lösbarkeit der Tapete von der Wand- oder Deckenfläche.

Vorzugsweise ist die Grundschicht unter Aufrechterhaltung ihrer textilen Flächenstruktur an einer Schneidkante und/oder nicht-ausfasernd und/oder nichtausfransend zuschneidbar. Das ergibt den Vorteil, dass die Grundschicht bzw. die Tapete nicht durch das Zuschneiden beschädigt wird. Insbesondere wird dadurch ein seitens des Anwenders unerwünschtes Aufribbeln der Grundschicht in Fortsetzung von Fehlstellen an der Schneidkante vermieden. Auch hat sich dies experimentell, wie bspw. in der weiter unten beschriebenen Versuchsreihe anhand bevorzugter Ausführungsformen der erfindungsgemäßen Tapete detailliert ausgeführt, als vorteilhaft hinsichtlich dem handwerklichen Handling beim Tapezieren sowie dem vollständigen (Ab-)Lösen der Tapete erwiesen.

Vorzugsweise ist die Grundschicht, insbesondere in dem durch den, in dem flüssigen bzw. nicht-abgebundenen Zustand befindlichen, Tapetenkleister benetzten Zustand, luftdurchlässig ausgebildet ist, so dass beim Anbringen der Tapete an der Wand- oder Deckenfläche eingeschlossene Luftblasen entweichen und/oder diffundieren können. Dies ist besonders nützlich für den Anwender im Zuge der Tapezierung. Ferner verbessert dies die Gesamtqualität des handwerklichen Ergebnisses der Tapete.

Vorzugsweise ist die Grundschicht, insbesondere in einem getrockneten bzw. abgebundenen Zustand des auf die Grundschicht aufgebrachten Tapetenkleisters, luftdurchlässig ausgebildet. Dabei beträgt weiter bevorzugt eine Luftdurchlässigkeit größergleich 1.000 l/m2 s, besonders bevorzugt größergleich 1.400 l/m2 s und insbesondere bevorzugt größergleich 1.900 l/m2 s. Dies ist vorteilhaft, da dadurch eine gute Luftzirkulation und gesunde Wohnatmosphäre positiv befördert werden. Ferner verhindert die Luftdurchlässigkeit ein unerwünschtes Auskondensieren von Feuchte zwischen der Wand- oder Deckenfläche und der Tapete.

Vorzugsweise ist die Grundschicht und/oder der Garnfaden der Grundschicht und/oder das einzelne Filament der Grundschicht flammhemmend ausgerüstet. Vorteeile ergeben sich aus Aspekten des Brandschutzes für die Anwendung als Tapete. Beispielsweise ist es bekannt, eine Prüfung auf Entflammbarkeit zur Einreihung in die Baustoffklasse B1 "schwer entflammbar" nach DIN 4102, Teil 1 (Mai 1998), durchzuführen. Demzufolge ist es bevorzugt, dass die Tapete die gesetzlich vorgesehenen Anforderungen dieser Baustoffklasse erfüllt, wozu die Offenbarung der o.a. zugehörigen DIN-Norm in die vorliegende Offenbarung durch Verweis ausdrücklich miteinbezogen wird.

Noch weiter bevorzugt ist, dass die Grundschicht und/oder der Garnfaden der Grundschicht und/oder das einzelne Filament der Grundschicht (selber) aus einem flammhemmenden Material und/oder Compound ausgebildet ist. Sprich, bereits ein einzelner (Garn-)Faden bzw. dessen Ausgangsmaterial vor Verspinnung selber liegen mit bereits flammhemmender Funktion vor. Sprich, bevor das textile Flächengebilde bzw. für die Tapete verwendete Stoff ausgebildet wird. Gegenüber einer zuvor genannten flammhemmenden Ausrüstung zeigt diese Ausführungsform den noch besonderen Vorteil, dass die flammhemmenden Eigenschaften intrinsisch dem Material zu eigen sind. Insofern übersteht die bevorzugte flammhemmende Eigenschaft auch einen Waschvorgang der Tapete in zuverlässiger, gesicherter Weise. Beispielsweise kommen als flammhemmende Zusatzstoffe organische Halogen-Compounds infrage.

Vorzugsweise ist die Grundschicht und/oder der Garnfaden der Grundschicht und/oder das einzelne Filament der Grundschicht aus und/oder mit einem funktionalen Sondertextilwerkstoff, vorzugsweise Aramid und/oder Kohlenstoff und/oder PTFE, ausgebildet. Aramidfasern (bspw. Handelsnamen Kevlar, Arenka, Twaron) als Spezialfasern für Hochtechnologieprodukte weisen eine vorteilhaft besonders hohe Bruchfestigkeit von bis zu 2.700 N/mm² auf. Dabei beträgt die Bruchdehnung lediglich 2 - 4 %. Desweiteren weisen Aramidfasern ein vorteilhaft besonders hohes Elastizitätsmodul von 130.000 - 150.000 N/mm² auf. Textiles Polytetrafluorethylen bzw. PTFE (bspw. Handelsnamen Teflon, Hostaflon, Polyfon, Toyoflon usw.) zeichnet sich durch eine hervorragende Nassfestigkeit aus. Ferner ist die Ablösbarkeit vorteilhaft verstärkt, da PTFE außerordentlich antiadhäsiv wirkt. Dabei ist weiter vorteilhaft für die bevorzugte Ausführungsform der Tapete, dass PTFE in Luft unbrennbar ist, woraus sich besondere Vorteile hinsichtlich des Brandschutzes ergeben. Ferner vorteilhaft sind eine hohe Hydrophobizität (in Korrelation zum Benetzungsverhalten) sowie, unabhängig davon, eine hohe Chemikalienbeständigkeit zu nennen. Ferner weisen auch Kohlenstofffasern den technischen Vorteil auf, als quasi unbrennbar kategorisiert werden zu können. Ferner zeichnen sie sich durch einen extrem niedrigen thermischen Ausdehnungskoeffizienten aus, was im Rahmen der vorliegenden Erfindung mit Blick auf Tapezierungen von solchen Wand- oder Deckenflächen vorteilhaft ist, die geheizte Flächen, insbesondere Heizungsrohre, aufweisen. Dabei zeichnen sich Kohlenstofffasern (bspw. Handelsnamen Celion, Carbolon, Sigrafil, Thornel) durch eine vorteilhaft hohe Bruchfestigkeit von 2.000 bis 3.000 N/mm² aus. Dabei beträgt die Bruchdehnung < 1 %. Des Weiteren weisen Kohlenstofffasern ein vorteilhaft außerordentlich hohes Elastizitätsmodul von 200.000 - 500.000 N/mm² auf.

Vorzugsweise ist die Grundschicht und/oder der Garnfaden und/oder das einzelne Filament bedruckbar, insbesondere mittels Digitaldruck und/ oder Sublimationsdruck. Hinsichtlich des optisch erreichbaren Ergebnisses einer für den Anwender dekorativen Tapete in hochwertiger und gleichzeitig kostengünstiger Ausführung ist die vorliegende Erfindung in keinerlei Hinsicht auf ein einzelnes der nach dem Stand der Technik bekannten Druckverfahren limitiert. Insbesondere ist bevorzugt, die Grundschicht bzw. das textile Flächengebilde auf ein anwendungsseitig bevorzugtes Druckverfahren hin auszusuchen. Alternativ und/oder kumulativ ist es vice versa bevorzugt, ein Druckverfahren und/oder Druckfarben bzw. Druckertinten auf eine anwendungsseitig bevorzugte erfindungsgemäße Tapete mit der Grundschicht bzw. dem textilen Flächengebilde hin zu optimieren bzw. spezifisch auszusuchen.

Vorzugsweise ist die Grundschicht und/oder der Garnfaden und/oder das einzelne Filament bei 40°C waschbar. Dabei kann ein Waschschrumpf kleinergleich 3 %, vorzugsweise kleinergleich 1,5 %, betragen. Das wirkt vorteilhaft auf die Wiederverwendbarkeit bzw. die Recylierbarkeit der Tapete.

Vorzugsweise hat die Grundschicht und/oder der Garnfaden und/oder das einzelne Filament herstellseitig eine spezifische textil-funktionale Ausrüstung und/oder Nachbehandlung erfahren. Dies erweitert vorteilhaft das Spektrum spezifisch gewünschter weiterer technischer Funktionen, insbesondere hinsichtlich der einsetzbaren Druckverfahren und/oder Druckfarben und/oder hinsichtlich der Anwendung als die Tapete.

Vorzugsweise ist die Grundschicht und/oder der Garnfaden und/oder das einzelne Filament anti-mykotisch und/oder anti-bakteriell ausgebildet und/oder behandelt. Das ist insbesondere bei feuchten Wand- oder Deckenfläche sowie für die Verwendung der Tapete in Wohnräumen unter gesundheitlichen Gesichtspunkten besonders vorteilhaft.

Vorzugsweise ist die Grundschicht und/oder der Garnfaden und/oder das einzelne Filament schalldämmend ausgebildet. Das ermöglicht vorteilhaft den Einsatz zur Tapezierung in ansonsten hellhörigen Wohnräumen, als Raumtrenner in Großraumbüros, in Messehallen oder Produktionsstättem mit starker Schallbildung und dergleichen.

Vorzugsweise ist die Grundschicht aus zumindest 50%, vorzugsweise größergleich 80%, insbesondere bevorzugt 100%, aus einem biologisch abbaubaren Material und/oder Compound hergestellt. Dabei kann insbesondere ein Compound bzw. eine Zusammensetzung ein, vorzugsweise recyceltes, Polymeres umfassen. Dabei kommen weiter bevorzugt Stärke und Stärkederivate als biologisch abbaubare Materialien bzw. Anteile an der Zusammensetzung für die Grundschicht in betracht. Damit ist die Tapete besonders nachhaltig umweltfreundlich herstellbar und kann besser kompostierbar sein.

Vorzugsweise hat (bzw. weist auf) die Grundschicht zumindest einen, im Wesentlichen, in einer Längsrichtung der Tapete verlaufenden ersten Garnfaden und einen, im Wesentlichen, in einer Querrichtung zu dem ersten Garnfaden verlaufenden zweiten Garnfaden. Dabei ist der erste Garnfaden in zumindest einem textilen und/oder physikalischen Unterscheidungsparameter verschieden gegenüber dem zweiten Garnfaden ausgebildet. Insbesondere im Falle der als die Webware ausgebildeten Grundschicht kann der erste Garnfaden als ein parallel zu einer Webkante der Tapete verlaufender Kettfaden der Webware ausgebildet sein; und der zweite Garnfaden kann als der Schussfaden der Webware ausgebildet sein. Das bewirkt den Vorteil, dass die Grundschicht bzw. das textile Flächengebilde bei ansonsten weiterhin einfacher, integraler textiler Struktur und/oder Herstellung besondere, spezifisch unterschiedliche, technische, Funktionen in einem einzigen bzw. integralen Gebilde abbilden kann, selbst wenn diese gegebenenfalls in einem einzigen Garnfaden schwerlich zu vereinbaren wären.

Insbesondere ist es auch denkbar, dass die Grundschicht bzw. das textile Flächengebilde in einer Höhenrichtung (davon) unterschiedliche Anteile der beiden funktional verschiedenen ersten und zweiten Garnfäden ausbildet. Damit lassen sich auf der wandseitigen Fläche versus der wandabgewandten Fläche der Grundschicht unterschiedliche (grenzflächen-)physikalische und/oder chemische Eigenschaften gezielt einstellen.

Dabei kann vorzugsweise der zumindest eine Unterscheidungsparameter folgende Parameter des Garnfadens und/oder des einzelnen Filamentes des Garnfadens umfassen: eine Dicke bzw. einen Durchmesser. Alternativ oder kumulativ ist der zumindest eine Unterscheidungsparameter ein Material, insbesondere ein Polymeres. Alternativ oder kumulativ ist der zumindest eine Unterscheidungsparameter eine Reißfestigkeit und/oder eine Bruchfestigkeit. Alternativ oder kumulativ ist der zumindest eine Unterscheidungsparameter ein Elastizitätsmodul und/oder ein Dehnungsverhalten; Alternativ oder kumulativ ist der zumindest eine Unterscheidungsparameter eine Oberflächenspannung. Alternativ oder kumulativ ist der zumindest eine Unterscheidungsparameter ein (dynamischer und/oder statischer) Benetzungswinkel (bzw. Randwinkel), insbesondere was die Benetzbarkeit durch Wasser und/oder durch den Tapetenkleister in dem flüssigen bzw. nicht abgebundenen Zustand anbelangt. Alternativ oder kumulativ ist der zumindest eine Unterscheidungsparameter ein (dynamischer und/oder statischer) Benetzungswinkel (bzw. Randwinkel), insbesondere was die Benetzbarkeit durch den dispersen Anteil des Tapetenkleisters im flüssigen bzw. nicht abgebundenen Zustand und/oder im getrockneten bzw. abgebundenen Zustand betrifft. Alternativ oder kumulativ ist der zumindest eine Unterscheidungsparameter eine textile Ausrüstung und/oder Nachbehandlung. Alternativ oder kumulativ ist der zumindest eine Unterscheidungsparameter eine Bedruckbarkeit (insb. Druckfarben und/oder -Verfahren).

Gemäß einer bevorzugten Ausführungsform der Erfindung kann die Tapete eine Großtapete sein. Insbesondere kann die Tapete als ein einstückiges rechteckförmiges Flächengebilde mit Seitenlängen von jeweils mehr als 2 m ausgebildet sein. Es ist alternativ auch jede erdenkliche andere Form für besagte Großtapete möglich. Die Verwendung eines synthetischen textilen Grundmaterials bzw. einer zugeschnittenen Grundschicht gemäß einer der vorgenannten Ausführungsformen ermöglicht es, große (wandfüllende) Tapeten in einem Stück herzustellen, die ausreichend stabil und dennoch vergleichsweise leicht sind. Durch die einstückige Auslegung der Tapete kann die Montage bzw. das Anbringen an einer Wand- oder Deckenfläche deutlich vereinfacht werden, da das Bahnenlegen entfällt. Auch bietet diese bevorzugte Ausführungsform der Großtapete viele vorteilhafte Anwendungen nicht nur im Bereich der Innenausstattung von Wohn- und Bürogebäuden, sondern auch im Messebau, der Dekoration bzw. Gestaltung von Fassaden, für Werbeflächen, usw.

Gemäß einer bevorzugten Ausführungsform kann das synthetische Textilmaterial der Grundschicht ein Flächengewicht unter 200 g/m² haben, um auch für großflächige Tapeten das Gewicht in einem handhabbaren Bereich zu halten. Bevorzugt kann das Material ein Flächengewicht in einem Bereich zwischen 60 g/m² und 180 g/m², noch weiter bevorzugt zwischen 105 g/m² und 125 g/m², haben. Dieser Flächengewichtsbereich bietet eine gute Kombination aus ausreichender Festigkeit für ein zerstörungsfreies Abziehen und einem geringen Montagegewicht. Bevorzugt kann das Textil aus Polyesterfäden mit einem Dtex zwischen 100 und 200, vorzugsweise mit einem Dtex von 160, gefertigt werden.

Gemäß einem weiter bevorzugten Aspekt der Erfindung kann die textile Grundschicht bedruckt sein, insbesondere mit einem Dispersionsfarbstoff im Sublimationsdruckverfahren oder im Latexdruckverfahren bedruckt sein. Auf diese Weise wird ein besonders einfaches Bereitstellungsverfahren ermöglicht, bei dem das gemäß der vorstehend beschriebenen Ausführungsformen beschriebene bevorzugte synthetische Textil als Halbfabrikat für eine Reihe von Tapeten dient, die jeweils mit anderen Motiven bedruckt werden. Das Bedrucken mit Dispersionsfarbstoffen hat sich als besonders vorteilhaft für die gewählte Materialauswahl und Beschaffenheit der Grundstruktur herausgestellt.

Ein weiterer Aspekt der Erfindung betrifft ein Montageset, genannt "Easy-Kit", mit einer Tapete gemäß einem der vorgenannten Aspekte und einer definierten Menge an Tapetenkleister sowie einer Anzahl an Montageklammern. Weitere optionale Bestandteile des Montagesets können ein Pinsel sowie ein Skalpell mit einer Schablone sein.

Ein weiterer Aspekt der Erfindung betrifft ein Verfahren zum Bereitstellen einer wiederverwendbaren Tapete, insbesondere einer Tapete gemäß einem der vorgenannten Aspekte. Besagtes Verfahren beinhaltet zumindest die folgenden Schritte: Abfragen oder Ermitteln eines gewünschten Höhenmaßes und eines gewünschten Breitenmaßes; Anpassen, insbesondere Zuschneiden, eines textilen Halbfabrikats gemäß einem der vorgenannten Aspekte zu einem flächenförmigen Gebilde mit den abgefragten oder ermittelten Maßen; und ggf. Aufdrucken eines Motivs auf das angepasste, flächenförmige Gebilde.

Durch dieses Bereitstellungsverfahren kann mit geringem Aufwand eine große Palette an verschiedenen wiederverwendbaren Tapeten angeboten werden, da lediglich eine Grundschicht-Variante bzw. Textilvariante bereitgestellt werden muss, die dann bedruckt und in beliebige Größen zugeschnitten werden kann.

Bevorzugt sind je nach Anwendungsbereich vier verschiedenen Ableitungen des Trägermaterials möglich:
- Waschbar (Basic);
- UV-Beständig;
- Mit Grundierung; und
- Mit Glanzoberfläche.

In anderen Worten können vom Kunden gewünschte Tapetenmaße abgefragt werden, bspw. die Flächenmaße einer zu tapezierenden Wandfläche. Auf Basis dieser abgefragten Maße wird dann aus einer großen Rolle oder dergleichen des textilen Halbfabrikats (bevorzugt des Polyestergewirkes) eine Großtapete mit diesen Maßen herausgeschnitten. Falls gewünscht kann die Tapete vor oder nach dem Zuschneiden mit einem Motiv oder Muster bedruckt werden.

Gemäß einer bevorzugten Weiterbildung kann das Motiv im Digitaldruck, insbesondere im Sublimationsdruckverfahren auf das angepasste flächenförmige Gebilde gedruckt werden.

Gemäß einer bevorzugten Ausführungsform kann das vorstehend beschriebene Verfahren um zumindest einen der folgenden Schritte zur Bereitstellung eines Montagesets ergänzt werden: Bereitstellen einer definierten, berechneten Menge an Kleister auf Basis der abgefragten oder ermittelten Maße der zu verkleidenden Wand-oder Deckenfläche; und Bereitstellen einer Anzahl von Montageklammern abhängig von der abgefragten Breite der Tapete.

Ein weiterer und gegebenenfalls unabhängig beanspruchbarer Aspekt der Erfindung betrifft eine Tapete, die als Maltapete ausgebildet ist. Dabei handelt es sich um eine Stofftapete, insbesondere nach einem der vorgenannten Aspekte mit einer bemalbaren Grundierung. Zusätzlich weist besagte Tapete eine, vorzugsweise in der Grundschicht integral ausgebildete und/oder hineingewirkte, Folienschicht bzw. Hintergrundfolie auf, die die Wand gegenüber der bemalbaren Grundierung fluiddicht abschottet. In anderen Worten kann zum Schutz der Mauer gegenüber jeglicher Einflussnahme auf den Grundzustand der Mauer eine Zwischenschicht (oder eine Randschicht) in Form einer (Kunststoff-)Folie hinzugefügt werden. Gemäß einem bevorzugten Ausführungsbeispiel kann diese Maltapete mit Malvorlagen bedruckt werden, um dann bspw. mit wasserlöslichen Filzstiften bemalbar zu sein. Nach Benutzung der Maltapete kann diese in der Waschmaschine wieder in den Urzustand zurückgeführt werden und erneut an der Wand zum bemalen befestigt werden. Hierbei ist anzumerken, dass die Waschbarkeit sich auf 3-5 Waschgänge pro Maltapete begrenzt. Dies bezieht sich auf die aufgedruckten Malvorlagen, die sich pro Waschgang in schwächerer Erscheinung entwickeln. Ist die Malvorlage gänzlich ausgewaschen, bleibt die unendliche Verwendung als Malgrund ohne Malvorlage erhalten.

Zusammengefasst könnte man sagen, die Verwendung eines Textils, insbesondere einer Maschenware, weiter bevorzugt eines Polyestergewirkes, als Grundmaterial für eine Tapete bzw. das Bereitstellen eines solchen Textils zur Verwendung als Tapete ist ein Hauptaspekt der vorliegenden Offenbarung. Vorteilhafterweise kann das verwendete Textil ein Polyestergewirke mit einem gleichmäßigen Muster zusätzlich eingebrachter/eingearbeiteter Kleinstlöcher sein, um eine gute )Ab-)Lösbarkeit von der Wand und eine gute Bedruckbarkeit bereitzustellen.

Nachstehend werden Ausführungsbeispiele der vorliegenden Offenbarung auf der Basis der zugehörigen Figuren beschrieben:
Fig. 1 ist eine Schnittdarstellung einer an einer Wand montierten Tapete aus dem Stand der Technik;
Fig. 2 ist eine vergrößerte Darstellung bzw. Aufsicht einer Grundschicht einer Tapete gemäß einer ersten bevorzugten Ausführungsform der Erfindung;
Fig. 3 eine Darstellung eines Montagesets für eine Tapete gemäß einer bevorzugten Ausführungsform eines weiteren Aspektes der Erfindung;
Figuren 4A bis 4F zeigen schrittweise die Montage bzw. Befestigung einer Tapete mit einem Montageset gemäß der bevorzugten Ausführungsform aus Fig. 3;
Fig. 5A ist eine schematische Schnittdarstellung einer an einer Wand montierten Tapete gemäß einer zweiten bevorzugten Ausführungsform der Erfindung;
Fig. 5B ist eine schematische Schnittdarstellung der Tapete gemäß der zweiten bevorzugten Ausführungsform zur Veranschaulichung des Zustandes beim Ablösen der Tapete von der Wand;
Fig. 6A ist eine schematische Schnittdarstellung einer an einer Wand montierten Tapete gemäß einer dritten bevorzugten Ausführungsform der Erfindung;
Fig. 6B ist eine schematische Schnittdarstellung der Tapete gemäß der dritten bevorzugten Ausführungsform zur Veranschaulichung des Zustandes beim Ablösen der Tapete von der Wand;
Figuren 7A bis 7C zeigen vergrößerte Aufsichten einer als Polyester-Wirkware ausgebildeten Grundschicht einer Tapete gemäß weiteren bevorzugten Ausführungsformen der Erfindung;
Figuren 8A und 8B zeigen vergrößerte Aufsichten einer als Polyester-Webware ausgebildeten Grundschicht einer Tapete gemäß noch weiteren bevorzugten Ausführungsformen der Erfindung; und
Figuren 9A bis 9C zeigen vergrößerte Aufsichten einer als Polyester-Wirkware ausgebildeten Grundschicht einer Tapete gemäß noch weiteren bevorzugten Ausführungsformen der Erfindung.

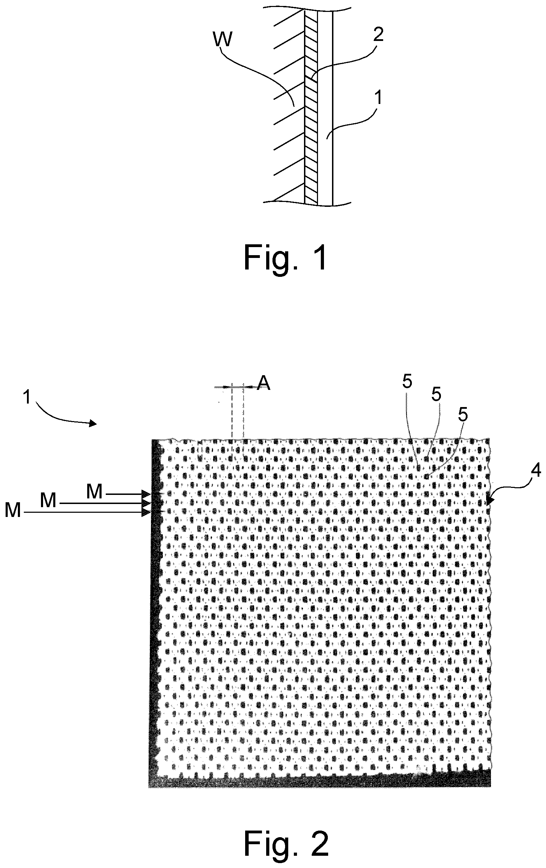

Figur 1 zeigt eine herkömmliche Tapete 1, wie sie aus dem Stand der Technik bekannt ist. Genauer gesagt handelt es sich um eine Papiertapete 1, die mittels eines Kleisters (Schicht 2) in Bahnen an eine Wandfläche W geklebt wurde.

Solche Tapeten haben den Nachteil, dass es aufwendig ist, die Wand mit schweren Papier- oder Fliesbahnen zu verkleiden, und ebenso aufwendig ist, die Bahnen restlos von der verkleideten Wandfläche wieder zu entfernen.

Die Anmelderin hat überraschend festgestellt, dass sich bei Verwendung bestimmter textiler Materialien als Grundmaterial für eine Tapete 1 besonders vorteilhafte Eigenschaften ergeben, die im Folgenden genauer erläutert werden.

Die in Figur 2 vergrößert dargestellte, im Wesentlichen rechteckförmigen (alleinige) Grundschicht 4 einer Tapete 1 gemäß einem bevorzugten Ausführungsbeispiel der Erfindung besteht aus einem Polyestergewirke mit einem Flächengewicht zwischen 60 g/m² und 180 g/m². Zwei besonders bevorzugte Textile zur Verwendung als Grundschicht 4 sind zum einen ein weißes (ungefärbtes) Polyestergewirke (100% Polyester) mit einer Dicke von 0,18 mm und einem Flächengewicht von 67 g/m² und ein weißes Polyestergewirke mit einer Dicke von 0,38 mm und einem Flächengewicht von 176 g/m². Man erkennt in der vergrößerten Darstellung der textilen Grundschicht 4 in der Figur 2 neben den Maschenreihen M auch Löcher 5, die gleichmäßig in die Struktur der Grundschicht 4 eingewirkt sind. Darüber hinaus zeigt die Figur 2, dass die Löcher 5 im bevorzugten Ausführungsbeispiel in jeder Maschenreihe M mit einem Abstand A gleichmäßig beabstandet eingewirkt sind. Die äquidistanten Lochreihen 5 sind in benachbarten Maschenreihen M jeweils zueinander versetzt angeordnet. Die einzelnen Löcher 5 haben im dargestellten Ausführungsbeispiel eine Fläche von ca. 0,4 mm². Die Struktur mit (Mikro-)löchern hat sich als besonders vorteilhaft für die Anwendung als Tapete 1 herausgestellt, da sie ein geringeres Gewicht der Tapete 1 zur Folge hat und zudem die effektive Haftungsfläche verringert, wodurch die Tapete auch im trockenen Zustand leicht von einer damit verkleideten Wand- oder Deckenfläche abziehbar ist. Ein bevorzugtes Verhältnis zwischen Lochfläche und Vollfläche ist zwischen 1:10 und 1:5.

Das als Grundschicht 4 der Tapete 1 verwendete Textil weist ein leichteres Gewicht als herkömmliche Tapeten auf, was die Handhabung bei der Montage vereinfacht. Die Löcher verursachen zudem, wie bereits erwähnt, eine deutliche Verringerung der Haftfläche zwischen Grundschicht 4 und der zu verkleidenden Fläche W, wobei der Betrachter aufgrund des Abstandes zur Tapete 1 trotzdem einen ästhetischen Gesamteindruck erhält, da die Aussparung bzw. Löcher 5 nicht bereits ab geringem Abstand nicht mehr mit dem bloßen Auge wahrnehmbar sind. Bei gleichmäßigen Lochmustern wie dem gemäß der bevorzugten Ausführungsform bleibt zudem eine gute Bedruckbarkeit des Stoffes erhalten. Zudem trocknet die Tapete 1 schneller und ist kostengünstiger in der Herstellung, da das Gewirk nicht vollflächig ist.

Die Tapete 1 gemäß dem bevorzugten Ausführungsbeispiel ist aus Polyester hergestellt. Aus diesem Material hergestellte synthetische Textile sind höchst widerstandsfähig, reißfest und langlebig. Gleichzeitig sind sie robust und pflegeleicht, da waschbar. Günstig ist außerdem, dass Polyester über ein geringes Gewicht verfügt und einfach bedruckbar ist. Der Stoff nimmt wenig Feuchtigkeit auf und ist schimmelbeständig, was in der Verwendung als Grundmaterial einer Tapete von Vorteil ist.

Im Folgenden wird bevorzugtes Verfahren zum Bereitstellen einer wiederverwendbaren (Groß-)Tapete 1 gemäß den vorstehend beschriebenen Ausführungsbeispielen der Erfindung erläutert.

Hierin werden zunächst bspw. über einen (Online/Internet-)Konfigurator die Maße der gewünschten Tapete abgefragt. Bspw. kann ein Höhen- und ein Breiten Maß der zu verkleidenden Wandfläche W abgefragt werden. Auf diese Weise kann eine Großtapete 1 bereitgestellt werden, die ein einem Stück eine ganze Wandfläche W verkleidet, wodurch aufwendiges Bahnenlegen und die Notwendigkeit eines Tapeziertisches entfällt und die Tapete 1 in einem Stück wieder abgezogen werden kann.

Die abgefragten Werte werden dazu verwendet, ein textiles Halbfabrikat - nämlich ein Stoff (Polyestergewirke) wie er vorstehend beschrieben wurde - auf die gewünschten Maße zuzuschneiden, um die Grundschicht 4 der Tapete 1 herzustellen.

In einem nächsten (optionalen) Schritt kann die zugeschnittene Grundschicht 4 in einem Digitaldruckverfahren, genauer gesagt in einem Sublimationsdruckverfahren, mit einem ebenfalls im (Online/Internet-)Konfigurator gewählten (oder vom Nutzer bereitgestellten/hochgeladenen) Muster oder Motiv bedruckt werden, um die Tapete 1 fertigzustellen.

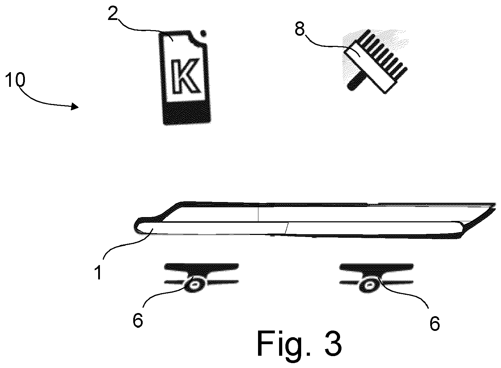

Gemäß einem bevorzugten Aspekt der Erfindung wird die wiederverwendbare Tapete 1 in einem in der Figur 3 schematisch abgebildeten Montageset 10, genannt Easy-kit) bereitgestellt. Das Easy-Kit 10 besteht grundsätzlich aus einer definierten Menge Kleister 4, einer Anzahl an Montageklammern 6, einer Deckenbürste 8, einem Skalpell (nicht dargestellt), sowie einem 30cm langen Aluminium L-Profil (nicht dargestellt). Optional wird dem Easy-Kit abhängig der Motivbreite ein weiteres Paket Kleister und eine weitere Montageklammer beigelegt.

Der Kleister 2 wird in definierten Einheiten (hier: 200g) dem Montageset 10 beigefügt. In Abhängigkeit von einer anhand der abgefragten Maße ermittelten Fläche wird eine Anzahl von Kleister-Einheiten berechnet, die im Montageset 10 enthalten ist.

Der dem Montageset 10 beigefügte Kleister basiert auf Zellulose und Stärke, es sind aber zugleich auch Anteile an Kunstharz (in diesem Falle ein Polyvinylchlorid-Harz) beigegeben, die Anfangshaftung und Klebeleistung erhöhen. Somit ist garantiert, dass sich auch großflächige Tapeten 1 verarbeiten lassen, ohne sich danach wieder von der Wand zu lösen.

Nachfolgend wird ein beispielhaftes Verfahren zum Verkleiden einer Wand W mit einer Tapete 1 und mit Hilfe eines Montagesets 10 gemäß dem vorstehend beschriebenen Ausführungsbeispiel erläutert.

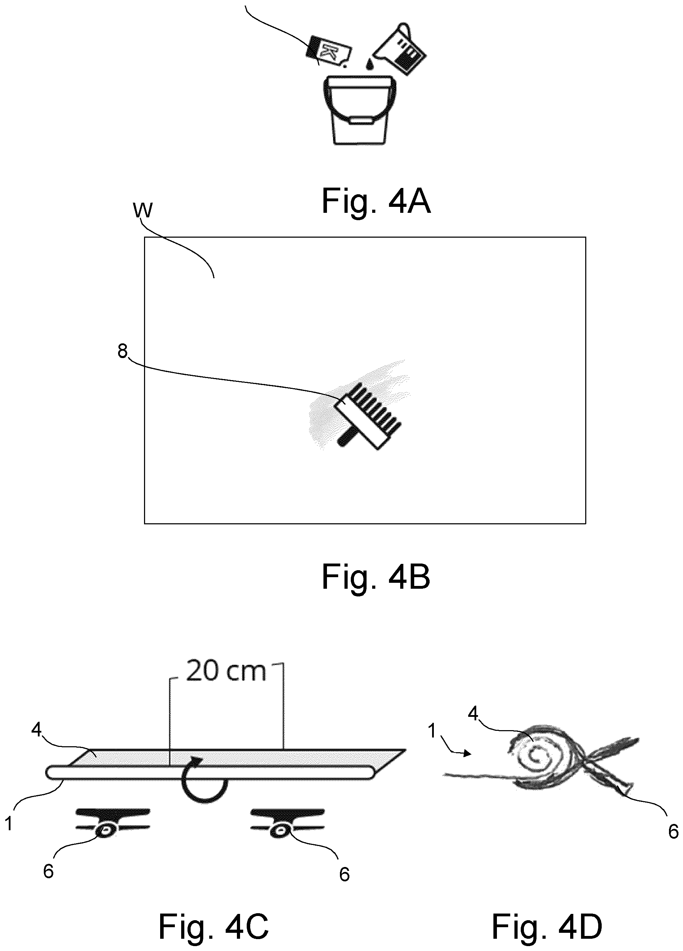

Als Erstes wird, wie in Figur 4A dargestellt ist, der mitgelieferte Kleister 2 des Montagesets 10 klumpenfrei mit Wasser angerührt.

Nach einer Quellzeit wird der Kleister 2 mittels des im Montageset mitgelieferten Pinsels 8 großzügig auf eine zu tapezierende Wand W aufgetragen (siehe Figur 4B).

Die Tapete 1 kann im gefalteten Zustand ausgeliefert bzw. gelagert werden. Zum leichteren Anbringen an der Wand wird in einem nächsten Schritt die Tapete 1 bis auf einen vorbestimmten Überstand (hier 20 cm) aufgerollt (siehe Figur 4C). Die aufgerollte Tapete wird mittels der Klammern 6 des Montagesets 10 fixiert, so dass sich die Tapete nicht ausrollen kann (siehe Figur 4D). Hierbei wird pro 2 m Tapetenbreite eine Klammer 6 zum Fixieren verwendet.

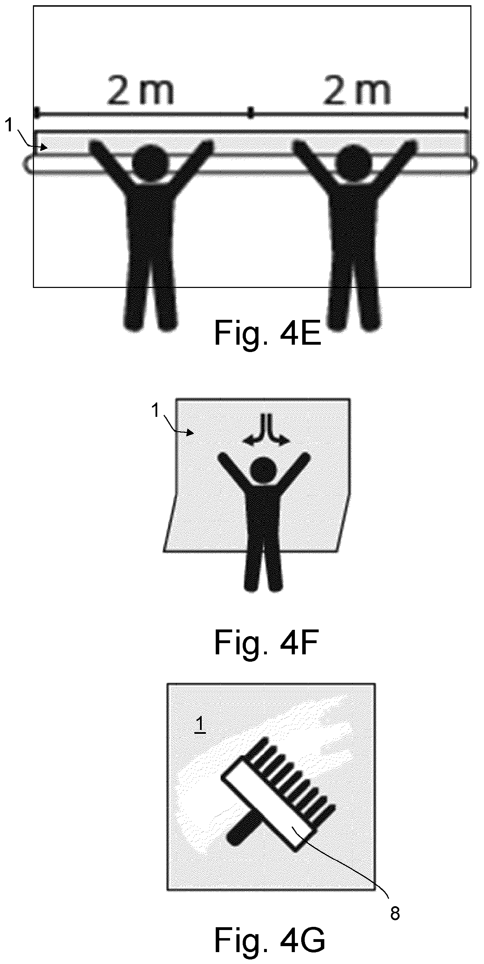

Der Überstand wird, wie in Figur 4E dargestellt ist, an der angrenzenden Kante der Wand W parallel ausgerichtet und an der eingekleisterten Wand festgedrückt.

Wie in Figur 4F gezeigt ist, werden (sobald der Überstand über die gesamte Breite befestigt ist) die Klammern gelöst und die Tapete 1 um eine bestimmte Länge (bspw. 20 cm) ausgerollt und erneut mit den Klammern 6 fixiert. Nun wird die Tapete 1 etwas von der Wand W abgerückt gespannt und anschließend daran angedrückt. Anschließend erfolgt ein Ausstreichen der Tapete 1 an die Wand W. Dieser Vorgang wird solange wiederholt, bis die Tapete vollständig an der Wand befestigt ist. Überschüssige Kleisterreste außerhalb des Tapetenbereichs unter Zuhilfenahme eines Handtuchs entfernen.

In einem letzten, in Figur 4G gezeigten Schritt wird nochmals die gesamte Tapete 1 mittels des Pinsels 8 mit Kleister 2 überstrichen.

Durch das Verwenden der Klammern 6 ist selbst bei sehr breiten Tapeten 1 eine unkomplizierte Montage möglich. Bevorzugt kann hierbei pro laufende 2m Tapetenbreite eine Person Hilfestellung leisten.

Die Tapete 1 lässt sich werkzeuglos und ohne jegliche (chemische) Substanzen rückstandslos und zerstörungsfrei abziehen. Die abgezogene Tapete 1 lässt sich waschen, (im gefalteten Zustand) lagern und an anderer Stelle anbringen. Die abgezogene Tapete 1 kann durch eine andere Tapete 1, z.B. mit einem anderen Motiv, ersetzt werden. Auf diese Weise lässt sich auf einfache Weise und sehr schnell ein "Tapetenwechsel" durchführen.

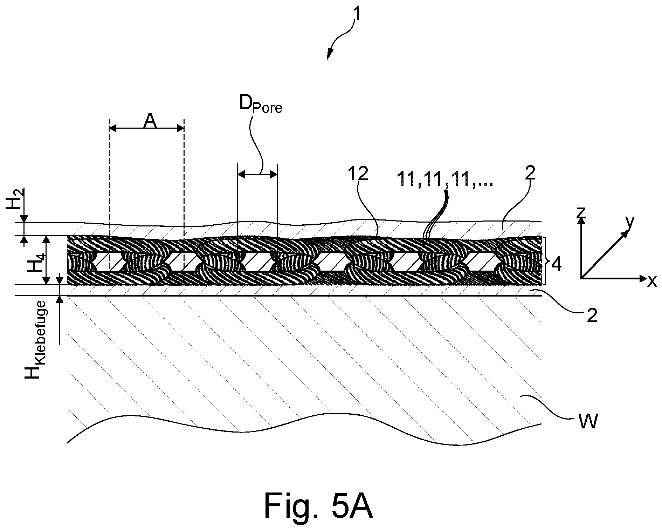

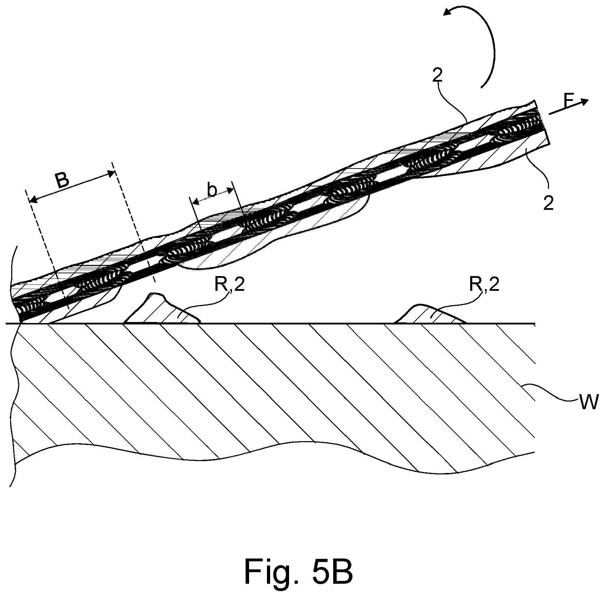

Fig. 5A und 5B zeigen eine schematische Schnittdarstellung einer Tapete 1 gemäß einer zweiten bevorzugten Ausführungsform der Erfindung, wobei diese Ausführungsform die Tapete 1 mit einer (einzigen) als Wirkware 4 (bzw. Maschenware 4) ausgeführten Grundschicht betrifft. Fig. 5A einerseits zeigt einen Zustand, in dem die Tapete 1 an eine(r) Wandfläche W montiert bzw. angekleistert ist. Dabei umfasst die modellhaft schematisierende Darstellung der Fig. 5A grundsätzlich alle Zustände, in denen ein Tapetenkleister 2 die Grundschicht 4 sowie auch die Wandfläche W (vollständig) benetzt hat. Sprich, unabhängig davon, wie zeitlich fortgeschritten der Prozess des Abbindens des Tapetenkleisters, d. h. im Falle eines als Dispersionsklebstoff vorliegenden Tapetenkleisters: des Abtrocknens des Tapetenkleisters, anzusehen ist. Fig. 5B andererseits zeigt einen zeitlich nachgelagerten Zustand, in dem die Tapete 1 bzw. die Grundschicht 4 wiederum von der Wandfläche W (ab-)gelöst bzw. durch Anlegen einer insbesondere manuell ausgeübten Zugkraft bzw. Ablösekraft F abgezogen wird.

Die Wirkware 4 (bzw. Maschenware 4) ist als länglicher Bahnenstoff, beispielsweise in einer Rollenkonfektionierung, in einer Längsrichtung x, insb. zur Ausbildung der Höhe einer Tapetenbahn der Tapete 1, erstreckt. Frei von mechanischen Zugkräften wird die der Wirkware 4 zugehörige ursprüngliche textile Grundstruktur auch in dem hier gezeigten, mit dem Tapetenkleister 2 eingekleisterten, Zustand quasi unverändert deutlich: So weist die Wirkware 4 eine der Stoffdicke der Wirkware 4 entsprechende Höhe der Grundschicht H₄ in einer Höhenrichtung z auf. Dabei ist die Wirkware 4 ferner in einer Querrichtung y, insb. zur Ausbildung der Breite einer Tapetenbahn der Tapete 1, erstreckt. Aus einem (in Näherung unendlichen) Garnfaden 12 ist eine Vielzahl der geschlungenen bzw. gewirkten Maschen der Wirkware 4 ausgebildet. Dabei ist der Garnfaden 12 aus einer Vielzahl einzelner Spinnfäden 11, 11 als einzelne Filamente einer polymeren Spinnfaser gedreht oder gezwirnt. Die Vielzahl der Maschen der Wirkware 4 bildet eine Vielzahl von schlingenförmigen Löchern bzw. Poren aus. Dabei weisen diese einen (mittleren bzw. nominellen) Maschendurchmesser D_{Pore} als Durchmesser des Lochs auf. Dabei ist die Vielzahl der Maschen der Wirkware 4 durch den textilen Herstellungsprozess regelmäßig mit einem (im Mittel bzw. quasi, zumindest entlang einer beliebigen Schnittebene) gleichen ersten Abstand zwischen den Löchern A angeordnet.

Ein im flüssigen, bspw. frisch angerührten, Zustand auf die zu tapezierende Wand W als Wand- oder Deckenfläche aufgebrachter Tapetenkleister 2, bspw. aus der Kategorie der Dispersionsklebstoffe, benetzt die wandseitige Fläche der Wirkware 4 nach dem flächigen Aufbringen der Tapete 1 auf die Wand W. Dadurch bzw. im Weiteren bildet sich eine Klebefuge mit einer Höhe der Klebefuge H_{Klebefuge} als haftvermittelnde Zwischenschicht aus (nicht maßstäblich dargestellt, kann idealerweise im Nanometerbereich aufspreiten bzw. liegen). Die Haftvermittlung ist bereits im noch nicht abgebundenen, d.h. flüssigen Zustand des Tapetenkleisters ausreichend hoch um zu bewirken, dass die Tapete 1 nicht aufgrund ihres Eigengewichts von der Wand W hinunterrutscht bzw. -fällt. Der noch flüssige Tapetenkleister 2 benetzt in die Vielzahl der Maschen mit dem Maschendurchmesser D_{Pore} und durchdringt die Wirkware 4 in einem inneren Leervolumen (nahezu) vollständig. Ein Überschuss an Tapetenkleister 2 tritt aus den Maschen aus, um an der wandabgewandten Seite der Wirkware 4 einen (bspw. geschlossenen) Oberflächenfilm mit einer Höhe einer wandabgewandten Tapetenkleisterschicht H₂ auszubilden.

Im Folgenden bindet der Tapetenkleister 2 zur Ausbildung des endgültigen Haftverbundes ab. Dies kann insbesondere erfolgen, indem ein wässriger Anteil bzw. eine Feuchte des Tapetenkleisters 2 in die Umgebung verdunstet bzw. die erfindungsgemäße Tapete 1 trocknet. Eine Verdunstung in die Umgebungsluft wird insbesondere durch Stofftransportvorgänge (insb. Diffusion, Löslichkeit, etc.) innerhalb (der Matrix) des Tapetenkleisters 2 bestimmt. Dabei ist von einer Veränderlichkeit des Trocknungs- bzw. Abbindeprozesses des Tapetenkleisters 2 entlang der Höhenrichtung z und/oder entlang einer Zeitachse (bzw. zeitlich) auszugehen.

Im Zuge eines ggf. Trocknungsvorganges zum Abbinden benetzen die polymeren Anteile des Tapetenkleisters die polymere Wirkware 4 stärker als die hydrophile Wand (Beton, Gips, mineralisch verputzt, etc.). Aufgrund dessen konzentriert sich der Tapetenkleister während des Abbindeprozesses, auf (grenzflächen)physikalischer und/oder chemikalischer Betrachtungsebene, tendenziell stärker zu der Wirkware 4 als zu der Wand. Das bewirkt bzw. unterstützt die (Ab-)Lösbarkeit der Tapete 1 im abgebundenen Zustand (idealerweise rückstandsfreie (Ab-)Lösbarkeit: ohne Reste von Filamenten 11 und/oder Garnfaden 12).

Darüber hinaus bewirkt die zuvor beschriebene höhere Benetzungsaffinität der polymeren Anteile des Tapetenkleisters zu der polymeren Wirkware 4 vorteilhaft, dass beim in Fig. 5B veranschaulichten Ablösen der Tapete 1 im Sinne des Ablösens der Wirkware 4 möglichst wenig in Form von Resten bzw. Fragmenten des Tapetenkleisters 2 ausgebildete Rückstände R auf der Wand W verbleiben.

Fig. 5B veranschaulicht weiterhin, dass eine als Zugkraft aufgebrachte Ablösekraft F das Ablösen der Tapete 1 zu einem (viel) späteren Zeitpunkt bewirkt. Der Zugvektor kann vorzugsweise einen geringen Vektoranteil in der Höhenrichtung z aufweisen. Mit anderen Worten, kann die Tapete 1 idealerweise plan abgezogen werden. Sprich, vorzugsweise erfolgt ein Abziehen bzw. Ablösen der Tapete 1 bzw. der Wirkware 4 durch einen Zugvektor(anteil), der in einer (bzw. nahe zu) durch die Längsrichtung x und die Querrichtung y aufgespannten Ebene ausgeübt wird.

Fig. 5B veranschaulicht weiterhin, dass die als Zugkraft aufgebrachte Ablösekraft F die Wirkware leicht dehnt, wodurch sich ein entsprechend gedehnter zweiter Abstand zwischen den gedehnten Löchern B ergibt. Ein Verhältniswert zwischen dem zweiten Abstand B und dem ersten Abstand A bestimmt sich aus einem der Wirkware 4 eigenen textilen Dehnungsverhalten und/oder einer der Wirkware 4 zugehörigen Dimensionsstabilität. Diese(s) kann (bzw. können) bspw. richtungsabhängig sein und/oder nicht linear (nicht Newton'sch) zu der als Zugkraft aufgebrachten Ablösekraft F korrelieren. Ferner ändern sich die Lochmaße der Vielzahl der Maschen zu einem (mittleren bzw. nominellen) Durchmesser eines gedehnten Lochs b.

Fig. 5B veranschaulicht weiterhin, dass sich durch das Benetzen des Tapetenkleisters 2 in die (Löcher der) Wirkware 4 im abgebundenen Zustand des Tapetenkleisters zumindest teilweise hinterschneidende Feststoff-Feststoff-Strukturen bzw. Grundschicht-Tapetenkleister-Strukturen ausbilden. Das unterstützt eine, vorzugsweise vollständige, idealerweise von Rückständen R freie, (Ab-)Lösbarkeit der Tapete 1 von der Wand W. Mit anderen Worten, kann der Tapetenkleister 2 mit der Wirkware 4 bzw. der Grundschicht zusammen von der Wand W gleich mit abgezogen werden.

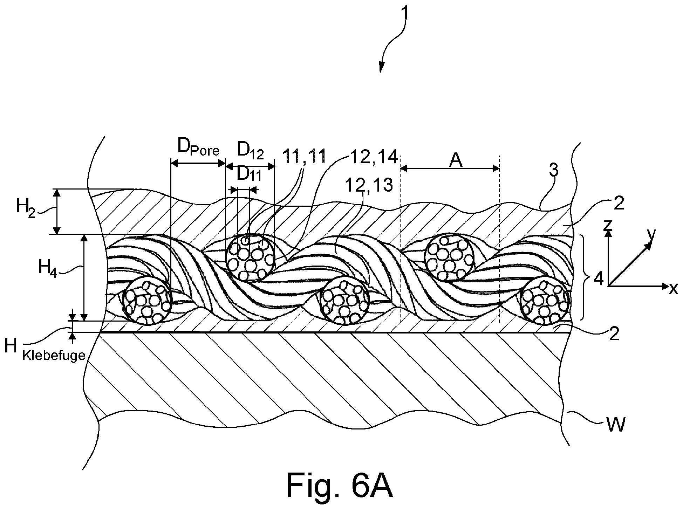

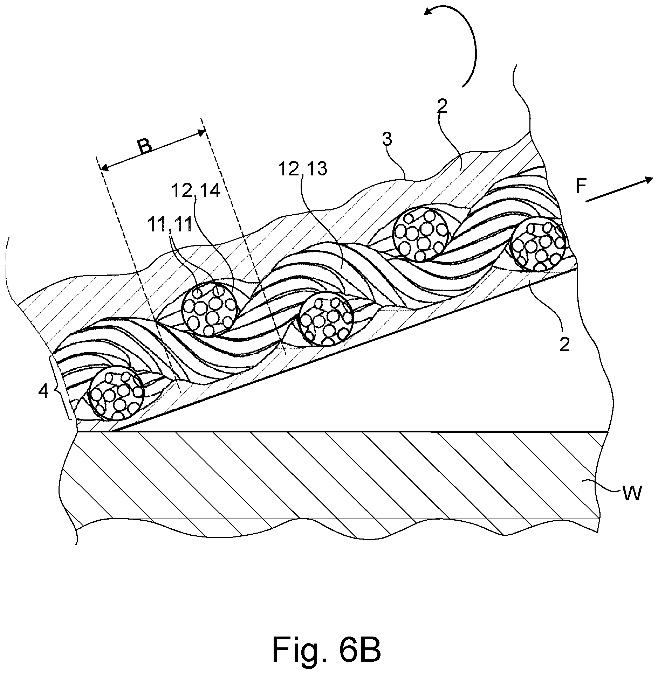

Fig. 6A und 6B zeigen, analog zu den Figuren 5A und 5B für die zweite bevorzugte Ausführungsform, eine schematische Schnittdarstellung einer Tapete 1 gemäß einer dritten bevorzugten Ausführungsform der Erfindung, wobei diese Ausführungsform eine Tapete 1 nicht mit einer als Wirkware, sondern mit einer als Webware 4 ausgeführten Grundschicht betrifft. Insofern bezeichnen zu den Figuren 5A und 5B gleiche Bezugszeichen gleiche Merkmale bzw. Teile sowie Effekte und wird hinsichtlich der gemeinsamen Merkmale bzw. Teile sowie Effekte auf die zuvorstehende Beschreibung verwiesen.

Die Webware 4 ist als länglicher Bahnenstoff, beispielsweise in einer Rollenkonfektionierung, in einer Längsrichtung x, insb. zur Ausbildung der Höhe einer Tapetenbahn der Tapete 1, erstreckt. Sie kann auf diese Weise in einer kontinuierlichen Druckmaschine, beispielsweise in einem Rollen-Druckverfahren wie Offset, Sublimation, etc., mit sehr hohen Bahngeschwindigkeiten in gleichfalls der Längsrichtung x bedruckt sein.

Die als Webware 4 ausgebildete Grundschicht weist (zumindest) einen (ggf. endlosen) Kettfaden 13 in einer Längsrichtung der Webware 4 auf und (zumindest) einen (ggf. endlosen) Schussfaden 14 in einer (im Wesentlichen) Querrichtung y der Webware 4. Sprich, der Kettfaden 13 wird von dem Schussfaden 14 in einem sich, vorzugsweise rechtwinklig, kreuzenden Fadensystem zur Ausbildung eines textilen Flächengebildes gekreuzt. Durch die gegenseitige Einbindung des Kettfadens 13 und des Schussfadens 14 ist die Webware 4 dimensionsstabil. Ferner ist in Fig. 6A veranschaulicht, insb. in der Gegenüberstellung zu der analogen Fig. 5A für die zweite Ausführungsform mit einer als Wirkware ausgebildeten Grundschicht, dass die ggf. enge, dichte Verwebung impliziert, dass sich zwischen den Überkreuzungspunkten des Kettfadens 13 und des Schussfadens 14 vergleichsweise enge Lücken bzw. Löcher mit einem kleineren Durchmesser des Lochs D_{Pore} ausbilden. Auch ist in Fig. 6A ein Leervolumenanteil der Webware 4 veranschaulicht, der gegenüber dem Leervolumenanteil der in Fig. 5A gezeigten Wirkware 4, geringer erscheint.

Daraus folgert bei ansonsten vergleichbaren Verhältnissen, dass sich eine andere anteilige Höhenverteilung des Tapetenkleisters 2 ergibt, insofern im Bereich der Höhe H₄ der Webware 4 wenig(er) Raum für (einen Überschuss) an Tapetenkleister 2 besteht. Im Vergleich zu der in der Fig. 5A (für die Wirkware) gezeigten Situation bilden sich dadurch für die Webware 4 die Höhe einer wandabgewandten Tapetenkleisterschicht H₂ und/oder die Höhe der Klebefuge H_{Klebefuge} stärker bzw. erhöht aus.

Die Fig. 6A zeigt das nicht limitierende Beispiel, dass der Kettfaden 13 und der Schussfadens 14 der Webware 4 aus einem hinsichtlich der inneren und/oder äußeren Dimensionen gleichen Garnfaden 12 ausgebildet sind. Dabei ergibt sich der Durchmesser des Garnfadens D₁₂ aus dem Durchmesser des Bündels der Vielzahl von einzelnen Fasern 11, 11 als Filamenten, die jeweilig einen Durchmesser des Filaments D₁₁ aufweisen.

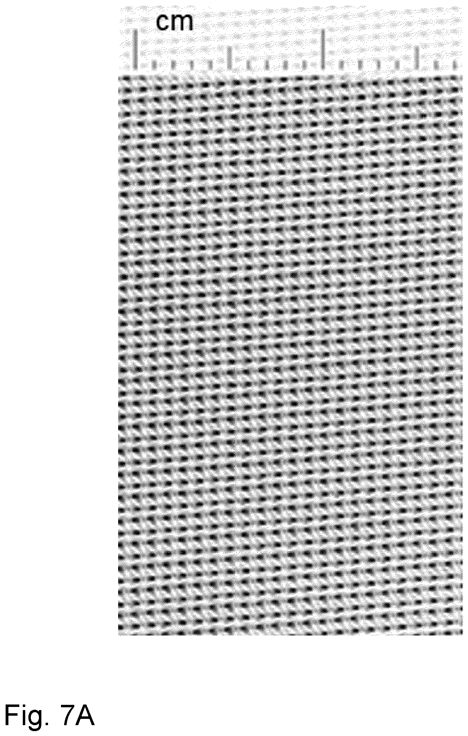

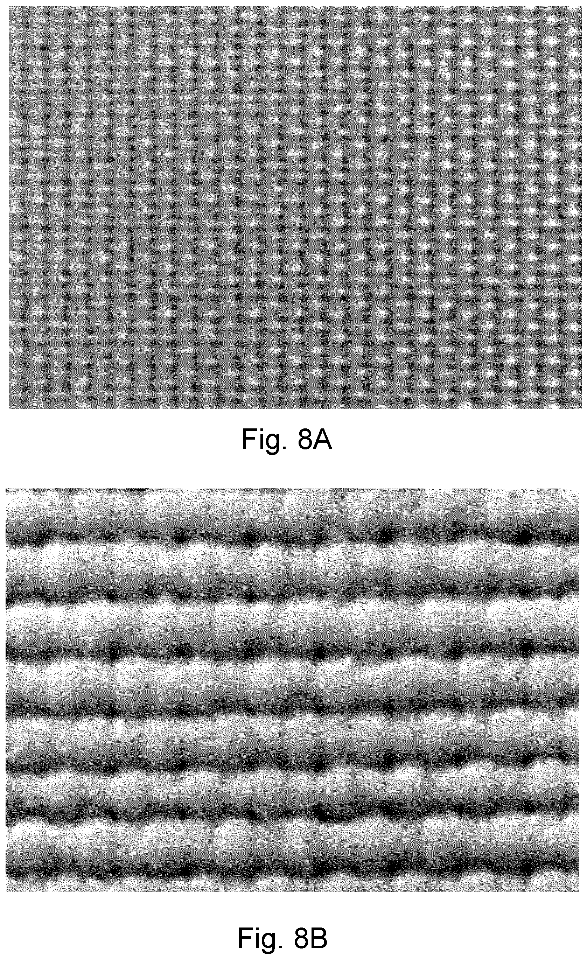

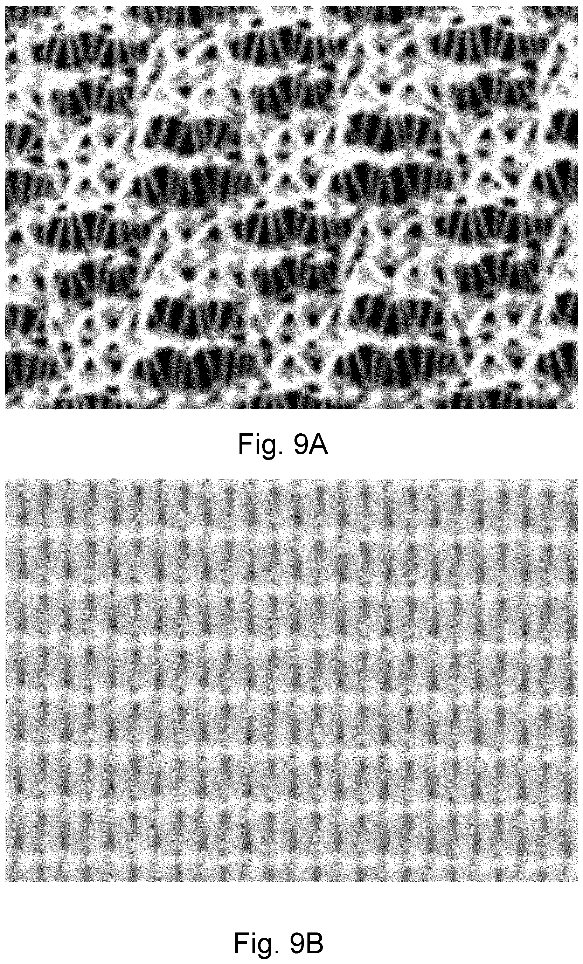

Figuren 7A bis 7C zeigen vergrößerte Aufsichten einer als Polyester-Wirkware ausgebildeten Grundschicht einer Tapete gemäß weiteren bevorzugten Ausführungsformen der Erfindung. Dabei ist jeweilig oben im Bild ein Zentimeter-Maßstab, unterteilt in zehn Millimeter-Abstände, dargestellt. Figuren 8A und 8B zeigen vergrößerte Aufsichten einer als Polyester-Webware ausgebildeten Grundschicht einer Tapete gemäß noch weiteren bevorzugten Ausführungsformen der Erfindung. Und Figuren 9A bis 9C zeigen vergrößerte Aufsichten einer als Polyester-Wirkware ausgebildeten Grundschicht einer Tapete gemäß noch weiteren bevorzugten Ausführungsformen der Erfindung.

Im Folgenden wird eine vergleichende Versuchsreihe für die in den Figuren 7A bis 9C gezeigten weiteren bevorzugten Ausführungsformen der Erfindung offenbart:

### 1. Versuchsaufbau:

Insgesamt wurden 12 unterschiedliche flächige Stoffproben als eine Grundschicht bzw. ein textiles Flächengebilde montiert bzw. tapeziert. Diese Stoffproben wurden nach dem Abtrocknen bzw. Abbinden des Tapetenkleisters wieder demontiert bzw. von der Wand abgezogen.

Die Stoffproben wurden zunächst auf eine einheitliche Größe mit einem quadratischen Zuschnitt von 50 cm x 50 cm zugeschnitten. Diese Stoffproben wurden sodann auf eine zuvor mit einem Tapetenkleister gleichmäßig eingekleisterte herkömmliche Gipskartonplatte zur Simulation einer Standardwandoberfläche plan aufgeklebt. Dabei wurde ein gleichmäßiger Auftrag durch flächiges Abziehen eines Überschusses des Tapetenkleisters mittels eines Gummilippenabstreifers besorgt.

Als der Tapetenkleister wurde hier ein herkömmlicher flüssiger Tapetenkleister (hergestellt durch die Firma Henkel KGaA, Typenbezeichnung "Metylan Spezialkleister") verwendet. Durch die flüssige Konfektionierung ist im Sinne der besseren experimentellen Reproduzierbarkeit gewährleistet, dass der Tapetenkleister hinsichtlich seiner Viskosität bereits stabilisiert formuliert eingesetzt wird. Damit ist der Einfluss eines ansonsten zeitlich veränderlichen Visikositätsaufbaus des Tapetenkleisters, insbesondere auf das Fließverhalten sowie den dynamischen und/oder statischen Benetzungswinkel, weitestgehend eliminiert. Auch sind bei dem hier verwendeten Tapetenkleister mittels der speziellen Formulierung das ansonsten relativ kurze zeitliche Verarbeitungsfenster verlängert sowie etwaige Effekte eines falschen Mischens bzw. Anrührens des Tapetenkleisters durch den Anwender ausgeblendet, was ebenfalls im Sinne einer optimierten Reproduzierbarkeit der hier offenbarten Versuchsreihe gewählt ist. Vergleichsversuche mit einem herkömmlichen Tapetenkleister (trockene Schüttung, selbst anzurühren) zeigten jedoch vergleichbare Resultate, so dass die Erfindung keineswegs auf die Verwendung eines flüssigen Tapetenkleisters limitiert ist.

Nach dem Abtrocknen bzw. Abbinden des Tapetenkleisters wurde die zur Demontage bzw. zum Abziehen der Stoffproben von der Wand benötigte maximale Abzieh-kraft mittels eines linearen Zugkraftmessgerätes in Newton gemessen. Dazu erfolgte das Abziehen entlang der Gipskartonplatte als Wandoberfläche, also in einem Winkel von quasi 0°, d.h. mit Zugrichtung parallel zur Wandoberfläche. Dabei wurde die jeweilige Stoffprobe von einer ersten Ecke (bspw. oben links) zu einer diametral gegenüberliegenden zweiten Ecke (bspw. unten rechts) plan (auf sich selber) abgezogen, so dass die Abziehkraft in (etwa) einem 45°-Winkel zu einer Oberkante bzw. Seitenkante der Stoffprobe ausgeübt wurde.

Bei der vergleichenden Versuchsreihe kamen folgende Stoffproben zum Einsatz:
a) Bekleidungsstoffe (nicht in Figuren dargestellt)

| | |
|---|---|
| 100% Viskose, | Webware |
| 100% Polyester, | Webware |
| 100% Leinen, | Webware |
| 100% Baumwolle, | Webware |

b) Fahnenstoffe der Fa. Georg+Otto Friedrich GmbH (64846 Groß-Zimmern, Deutschland)

| | |
|---|---|
| 6043 KFL, | Wirkware |
| 6144 GS, | Wirkware |
| 7137 KGFS, | Wirkware |

c) Fahnenstoffe der Fa. Gebrüder Aurich GmbH (42477 Radevormwald, Deutschland)

| | |
|---|---|
| Nr. 637, | Webware |
| Nr. 624, | Webware |
| Nr. 386, | Wirkware |
| Nr. 254, | Wirkware |
| Nr. 261, | Wirkware |

### 2. Versuchsergebnisse:

### a) Bekleidungsstoffe

100% Polyester (nicht in Figuren dargestellt)
Montage
   - Verformung bei Aufbringen auf Klebefläche;
   - ungleichmäßiges Durchdringen des Stoffes durch den Kleber;
   - Ausfasern an den Rändern;
Demontage
   + Formhaltigkeit beim Austrocknen;
   ++ im Ganzen abziehbar ohne Rückstände, max. Abziehkraft 12 N;
   - Ausfasern an den Rändern.
100% Viskose (nicht in Figuren dargestellt)
Montage
   - Verformung bei Aufbringen auf Klebefläche;
   - ungleichmäßiges Durchdringen des Stoffes durch den Kleber;
   - Ausfasern an den Rändern;
Demontage
   + Formhaltigkeit beim Austrocknen;
   -- nicht zerstörungsfrei abziehbar, max. Abziehkraft 90 N;
   - Ausfasern an den Rändern.
100% Leinen (nicht in Figuren dargestellt)
Montage
   - Verformung bei Aufbringen auf Klebefläche;
   - ungleichmäßiges Durchdringen des Stoffes durch den Kleber;
   - Ausfasern an den Rändern;
Demontage
   + Formhaltigkeit beim Austrocknen;
   ++ im Ganzen abziehbar ohne Rückstände, max. Abziehkraft 41 N;
   - Ausfasern an den Rändern.
100% Baumwolle (nicht in Figuren dargestellt)
Montage
   - Verformung bei Aufbringen auf Klebefläche;
   - ungleichmäßiges Durchdringen des Stoffes durch den Kleber;
   - Ausfasern an den Rändern;
Demontage
   + Formhaltigkeit beim Austrocknen;
   ++ im Ganzen abziehbar ohne Rückstände, max. Abziehkraft 17 N;
   - Ausfasern an den Rändern.

### b) Fahnenstoffe der Fa. Georg+Otto Friedrich GmbH (64846 Groß-Zimmern, Deutschland)

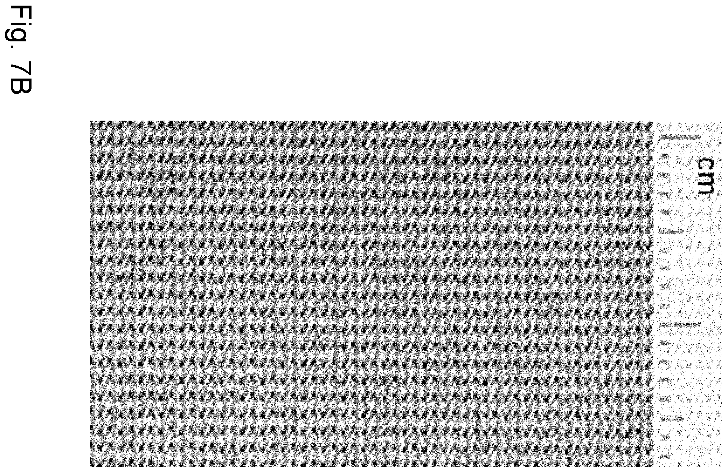

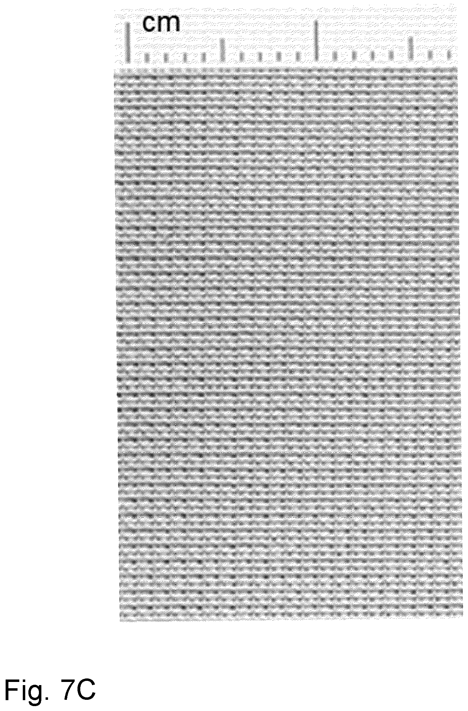

Nr. 6043 KFL, Wirkware
(vergrößerte Aufsicht in Fig. 7a)
Flammhemmend ausgerüstet;
Standardfahnenstoff; sehr gute Bedruckbarkeit,
Extra-Thermofixierung und Aufmachung für Digitaldruck;
Flächengewicht 110 g/m²;
Montage
   ++ ohne Verformung auf den Kleber anzubringen;
   ++ sehr gleichmäßiges Durchdringen des Stoffes durch den Kleber;
   ++ kein Ausfasern an den Rändern;
Demontage
   + Formhaltigkeit beim Austrocknen;
   ++ im Ganzen abziehbar ohne Rückstände, max. Abziehkraft 57 N;
   ++ kein Ausfasern an den Rändern.
Nr. 6144 GS, Wirkware
(vergrößerte Aufsicht in Fig. 7b)
Flammhemmend;
40°C maschinenwaschbar; professionelle Textilreinigung;
Transferdruck und/oder Direktdruck mit Sublimationstinten;
Flächengewicht 110 g/m²;
Montage
   ++ ohne Verformung auf den Kleber anzubringen;
   ++ sehr gleichmäßiges Durchdringen des Stoffes durch den Kleber;
   ++ kein Ausfasern an den Rändern;
Demontage
   +Formhaltigkeit beim Austrocknen;
   ++ im Ganzen abziehbar ohne Rückstände, max. Abziehkraft 62 N;
   ++ kein Ausfasern an den Rändern.
Nr. 7137 KGFS, Wirkware
(vergrößerte Aufsicht in Fig. 7c)
Flammhemmend;
Transferdruck und/oder Direktdruck mit Sublimationstinten und/oder
mit UV härtenden Tinten und/oder mit Latex-Tinten;
Flächengewicht 120 g/m²;
Montage
   ++ ohne Verformung auf den Kleber anzubringen;
   ++ sehr gleichmäßiges Durchdringen des Stoffes durch den Kleber;
   ++ kein Ausfasern an den Rändern;
Demontage
   + Formhaltigkeit beim Austrocknen;
   ++ im Ganzen abziehbar ohne Rückstände, max. Abziehkraft 38 N;
   ++ kein Ausfasern an den Rändern.

### c) Fahnenstoffe der Fa. Gebrüder Aurich GmbH (42477 Radevormwald, Deutschland)

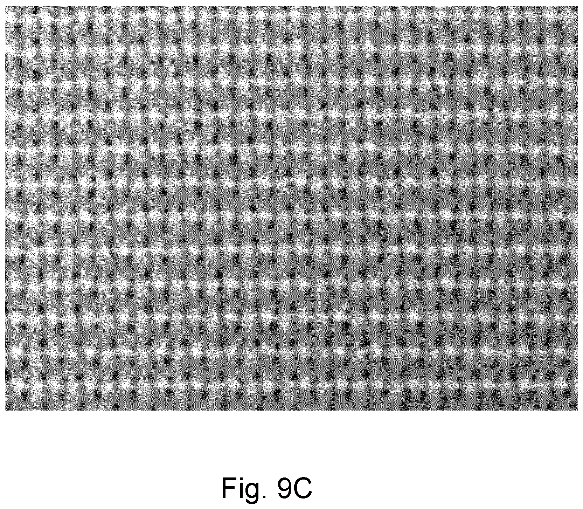

Nr. 637, Webware
(vergrößerte Aufsicht in Fig. 8a)
Leichtes Taffeta-artiges Gewebe für Innendekoration;
Anwendung: Indoor, Messen, Dekoration;
Flächengewicht 68 g/m²;
Sub-direkt-Druck;
Montage
   - Verformung bei Aufbringen auf Klebefläche;
   - ungleichmäßiges Durchdringen des Stoffes durch den Kleber;
   - Ausfasern an den Rändern;
Demontage
   + Formhaltigkeit beim Austrocknen;
   ++ im Ganzen abziehbar ohne Rückstände, max. Abziehkraft 35 N;
   - Ausfasern an den Rändern.
Nr. 624, Webware
(vergrößerte Aufsicht in Fig. 8b)
Weißbruchfreier gewebter Fahnenstoff,
längere Lebenszeit, sehr widerstandsfähig, starker Durchdruck, Kantenschärfe;
Anwendung: Extrem haltbare Fahnen, In- und Outdoor;
Flächengewicht 155 g/m²;
Sub-direkt-Druck;
Montage
   - Verformung bei Aufbringen auf Klebefläche;
   - ungleichmäßiges Durchdringen des Stoffes durch den Kleber;
   - Ausfasern an den Rändern;
Demontage
   + Formhaltigkeit beim Austrocknen;
   ++ im Ganzen abziehbar ohne Rückstände, max. Abziehkraft 32 N;
   - Ausfasern an den Rändern.
Nr. 386, Wirkware
(vergrößerte Aufsicht in Fig. 9a)
Wirkfahne für hohe Windkräfte mit angedeuteter Lochstruktur, 3-Fadensystem;
Flächengewicht 115 g/m²;
Siebdruck und/oder Transferdruck und/oder Sub-direkt-Druck;
Montage
   ++ ohne Verformung auf den Kleber anzubringen;
   ++ sehr gleichmäßiges Durchdringen des Stoffes durch den Kleber;
   ++ kein Ausfasern an den Rändern;
Demontage
   + Formhaltigkeit beim Austrocknen;
   ++ im Ganzen abziehbar ohne Rückstände, max. Abziehkraft 38 N;
   ++ kein Ausfasern an den Rändern.
Nr. 254, Wirkware
(vergrößerte Aufsicht in Fig. 9b)
Wirkfahne für für extra hohe Druckauflösung, 2-Fadensystem;
Flächengewicht 115 g/m²;
Siebdruck und/oder Transferdruck und/oder Sub-direkt-Druck;
Montage
   ++ ohne Verformung auf den Kleber anzubringen;
   ++ sehr gleichmäßiges Durchdringen des Stoffes durch den Kleber;
   ++ kein Ausfasern an den Rändern;
Demontage
   + Formhaltigkeit beim Austrocknen;
   ++ im Ganzen abziehbar ohne Rückstände, max. Abziehkraft 66 N;
   ++ kein Ausfasern an den Rändern.
Nr. 261, Wirkware
(vergrößerte Aufsicht in Fig. 9c)
Wirkfahne für hohe Druckauflösung;
dichte Struktur durch texturierten Fadenein-satz; 2-Fadensystem;
Flächengewicht 115 g/m²;
Siebdruck und/oder Transferdruck und/oder Sub-direkt-Druck;
Montage
   ++ ohne Verformung auf den Kleber anzubringen;
   ++ sehr gleichmäßiges Durchdringen des Stoffes durch den Kleber;
   ++ kein Ausfasern an den Rändern;
Demontage
   + Formhaltigkeit beim Austrocknen;
   ++ im Ganzen abziehbar ohne Rückstände, max. Abziehkraft 25 N;
   ++ kein Ausfasern an den Rändern.

### Bezugszeichen

- 1: Tapete
- 2: Tapetenkleister
- 4: Grundschicht
- 5: Löcher bzw. Pore
- 6: Montageklammer
- 8: Pinsel
- 10: Montageset
- 11: Filament
- 12: Garnfaden
- 13: Kettfaden
- 14: Schussfaden
- A: (erster) Abstand zwischen Löchern
- B: (zweiter) Abstand zwischen gedehnten Löchern
- b: Durchmesser eines gedehnten Lochs
- D₁₁: Durchmesser Filament
- D₁₂: Durchmesser Garnfaden
- D_{Pore}: Durchmesser Loch
- F: Ablösekraft
- H₂: Höhe einer wandabgewandten Tapetenkleisterschicht
- H₄: Höhe Grundschicht
- H_{Klebefuge}: Höhe Klebefuge
- R: Rückstand
- x: Längsrichtung
- y: Querrichtung
- z: Höhenrichtung
- M: Maschenreihen
- W: Wandfläche.

## Patentansprüche

1. Tapete (1), die mittels eines Tapetenkleisters (2) lösbar an eine Wand- oder Deckenfläche (W) anbringbar ist, wobei die Tapete (1) ausschließlich eine flächenförmige Grundschicht (4) aus einem Textil, vorzugsweise aus einer Kunstfaser, die auf der Wand- oder Deckenfläche (W) angebracht oder anbringbar ist, und keine herstellseitig aufgebrachte Klebstoffbeschichtung aufweist, **dadurch gekennzeichnet, dass**
die textile Grundschicht (4) zur Reduzierung der Haftungsoberfläche über ihre gesamte Fläche gleichmäßig verteilte Löcher (5), insbesondere Löcher (5) mit einer Fläche von 0,2 bis 2,0 mm², bevorzugt 0,3 bis 0,8 mm², aufweist.

2. Tapete (1) gemäß Anspruch 1, **dadurch gekennzeichnet, dass**
a) die Grundschicht (4) als eine Maschenware, bevorzugt als ein Gewirke, ausgebildet ist, wobei weiter vorzugsweise die Maschenware ausgebildet ist:
- mit einer Stäbchenmasche; und/oder
- im 1-Faden-System oder 2-Faden-System oder 3-Faden-System; und/oder
- als ein Kettengewirk; und/oder
- als ein Nähgewirk; oder
b) die Grundschicht (4) als ein Non-Woven, vorzugsweise als ein Gelege, noch weiter bevorzugt als kreuzlaminiertes Gelege, ausgebildet ist; oder
c) die Grundschicht (4) als eine, vorzugsweise nähgewebte, Webware ausgebildet ist, wobei weiter vorzugsweise die Webware in einer Leinwandbindung, insbesondere Panamabindung, und/oder in einer Köperbindung und/oder in einer Atlasbindung und/oder als Gittergewebe ausgebildet ist; oder
d) die Grundschicht (4) aus zumindest 50%, vorzugsweise größergleich 80%, insbesondere bevorzugt 100%, aus einem biologisch abbaubaren Material und/oder Compound, insbesonderen einem Compound mit einem, vorzugsweise recycelten, Polymeren, hergestellt ist, wobei weiter bevorzugt die Grundschicht (4) Stärke und Stärkederivate umfasst.

3. Tapete (1) gemäß einem der vorstehenden Ansprüche, **dadurch gekennzeichnet, dass** die Grundschicht (4) aus zumindest 50%, bevorzugt 100%, aus einem synthetischen Polymeren umfassend Polyamid und/oder Polyacryl und/oder Polypropylen, insbesondere aus Polyester hergestellt ist.

4. Tapete (1) gemäß einem der vorstehenden Ansprüche, **dadurch gekennzeichnet, dass** die Grundschicht (4) ein Flächengewicht unter 200 g/m², insbesondere zwischen 60 g/m² und 180 g/m², noch weiter bevorzugt zwischen 105 g/m² und 125 g/m², aufweist.

5. Tapete (1) gemäß einem der vorstehenden Ansprüche, **dadurch gekennzeichnet, dass**
die Grundschicht (4) einen längs-bestimmbaren ersten Dehnungswert bei 100 N und/oder einen quer-bestimmbaren Dehnungswert bei 100 N aufweist, der kleinergleich 25 %, vorzugsweise kleinergleich 15 % und insbesondere kleinergleich 7 % beträgt.

6. Tapete (1) gemäß einem der vorstehenden Ansprüche, **dadurch gekennzeichnet, dass** die Grundschicht (4) und/oder ein textiler Garnfaden (12) der Grundschicht (4) und/oder ein einzelnes textiles Filament (11) der Grundschicht (4) eine Zug- und/oder Reißfestigkeit größer 800 MPa, besonders größer 1.500 MPa und insbesondere bevorzugt größer 3.000 Mpa aufweist.

7. Tapete (1) gemäß einem der vorstehenden Ansprüche, **dadurch gekennzeichnet, dass** die Grundschicht (4) einen inneren Leervolumenanteil zwischen 2 % und 90 %, vorzugsweise zwischen 5 % und 85 %, besonders bevorzugt zwischen 10 % und 80 % und insbesondere bevorzugt zwischen 20 % und 60 % aufweist.

8. Tapete (1) gemäß einem der vorstehenden Ansprüche, **dadurch gekennzeichnet, dass**:
- eine erste Benetzbarkeit durch Wasser und/oder durch ein hydrophiles Lösungsmittel des Tapetenkleisters (2) auf die Wand- oder Deckenfläche (W) besser als auf die Grundschicht (4) ist; und
- eine zweite Benetzbarkeit durch einen dispersen Anteil des Tapetenkleisters (2) auf die Grundschicht (4) besser als auf die Wand- oder Deckenfläche (W) ist,
insbesondere in dem durch den in dem flüssigen bzw. nicht-abgebundenen Zustand befindlichen Tapetenkleister (2) benetzten Zustand der Tapete (1); und/oder
- die erste und/oder zweite Benetzbarkeit ausgebildet ist bzw. sind, so dass eine Höhe einer Klebefuge (H_{Klebefuge}) des Tapetenkleisters (2), welche sich in dem flüssigen bzw. nicht-abgebundenen Zustand zwischen der Grundschicht (4) und der Wand- oder Deckenfläche (W) ausbildet, kleinergleich 100 nm, vorzugsweise kleinergleich 10 nm und insbesondere ca. 1 nm beträgt.

9. Tapete (1) gemäß einem der vorstehenden Ansprüche, **dadurch gekennzeichnet, dass** die Grundschicht (4) und/oder der Garnfaden (12) und/oder das einzelne Filament (11):
- bedruckbar, insbesondere mittels Digitaldruck und/ oder Sublimationsdruck, ist; und/oder
- bei 40 °C waschbar, vorzugsweise mit einem Waschschrumpf kleinergleich 3 %, vorzugsweise kleinergleich 1,5 %, ist; und/oder
- herstellseitig eine spezifische textil-funktionale Ausrüstung und/oder Nachbehandlung erfahren hat; und/oder
- anti-mykotisch und/oder anti-bakteriell ausgebildet und/oder behandelt ist; und/oder
- schalldämmend ausgebildet ist.

10. Tapete (1) gemäß einem der vorstehenden Ansprüchen, **dadurch gekennzeichnet, dass**:
die Grundschicht zumindest einen, im Wesentlichen, in einer Längsrichtung (X) der Tapete (1) verlaufenden ersten Garnfaden (12, 13), gegebenfalls einen parallel zu einer Webkante der Tapete (1) verlaufenden Kettfaden (13) der Webware, und einen, im Wesentlichen, in einer Querrichtung (Y) zu dem ersten Garnfaden (12, 13) verlaufenden zweiten Garnfaden (12, 14), gegebenfalls einen Schußfaden (14) der Webware, aufweist; und
der erste Garnfaden (12, 13) in zumindest einem textilen und/oder physikalischen Unterscheidungsparameter verschieden gegenüber dem zweiten Garnfaden (12, 14) ausgebildet ist, wobei der zumindest eine Unterscheidungsparameter folgende Parameter des Garnfadens (12) und/oder des einzelnen Filamentes (11) des Garnfadens (12) umfasst:
- eine Dicke bzw. einen Durchmesser (D₁₁, D₁₂); und/oder
- ein Material, insbesondere ein Polymeres; und/oder
- eine Reißfestigkeit und/oder eine Bruchfestigkeit; und/oder
- ein Elastizitätsmodul und/oder ein Dehnungsverhalten; und/oder
- eine Oberflächenspannung; und/oder
- einen Benetzungswinkel, insbesondere durch Wasser und/oder durch den Tapetenkleister (2) in dem flüssigen bzw. nicht abgebundenen Zustand; und/oder
- einen Benetzungswinkel, insbesondere durch den dispersen Anteil des Tapetenkleisters (2) im flüssigen bzw. nicht abgebundenen Zustand und/oder im getrockneten bzw. abgebundenen Zustand; und/oder
- eine textile Ausrüstung und/oder Nachbehandlung; und/oder
- eine Bedruckbarkeit.

11. Tapete (1) gemäß einem der vorstehenden Ansprüche, **dadurch gekennzeichnet, dass** die Tapete (1) eine einstückige Großtapete (1) mit einer rechteckförmigen, flächigen Grundform ist, bei der beide Seitenlängen eine Länge von mindestens 2 m aufweisen.

12. Montageset zum Verkleiden einer Wand- oder Deckenfläche mit zumindest einer wiederverwendbaren Tapete (1) gemäß einem der vorstehenden Ansprüche, einer Anzahl von Montageklammern (6), einem Tapetenkleister (2), einem Skalpell, einem L-Profil, einer Bürste und/oder einem Pinsel (8).

13. Verfahren zum Bereitstellen einer Tapete (1) gemäß einem der vorstehenden, auf die Tapete (1) gerichteten Ansprüche, **gekennzeichnet durch** zumindest die folgenden Verfahrensschritte:
Abfragen oder Ermitteln eines gewünschten Höhenmaßes und eines gewünschten Breitenmaßes;
Anpassen, insbesondere Zuschneiden, eines textilen Halbfabrikats (4) zu einer flächenförmigen Grundschicht (4) der Tapete (1) mit den abgefragten oder ermittelten Maßen; und
Aufdrucken eines Motivs auf die angepasste Grundschicht (4).

14. Verfahren zum Bereitstellen einer wiederverwendbaren Tapete (1) gemäß Anspruch 13, **dadurch gekennzeichnet, dass** das Motiv im Sublimationsdruckverfahren auf die angepasste Grundschicht (4) gedruckt wird.

15. Verfahren zum Bereitstellen eines Montagesets (10) für eine mittels eines Verfahrens gemäß einem der auf das Verfahren gerichteten Ansprüche bereitgestellte Tapete (1), **gekennzeichnet durch** zumindest einen der Schritte:
Bereitstellen einer definierten, berechneten Menge an dem Tapetenkleister (2) auf Basis der abgefragten oder ermittelten Maße der zu verkleidenden Wand- oder Deckenfläche (W); und Bereitstellen einer Anzahl von Montageklammern (6).

## Claims

1. Wallpaper (1), which can be detachably applied to a wall or ceiling surface (W) by means of a wallpaper paste (2), the wallpaper (1) having exclusively a sheet-like base layer (4) of a textile, preferably of a synthetic fibre, which is attached or can be attached to the wall or ceiling surface (W), and no adhesive coating applied during manufacture, **characterised in that**
for reduction of the adhesion surface, the textile base layer (4) has openings (5), in particular openings (5) with an area of 0.2 to 2.0 mm², preferably 0.3 to 0.8 mm², distributed uniformly over its entire surface.

2. Wallpaper (1) according to claim 1, **characterised in that**
a) the base layer (4) is formed as a knit, preferably as a knitted fabric, further preferably the knit being formed
- with a rod stitch; and/or
- in a 1-thread system or 2-thread system or 3-thread system; and/or
- as a warp knitted fabric; and/or
- as a stitch-bonded fabric; or
b) the base layer (4) is formed as a non-woven, preferably as a laid structure, even more preferably as a cross-laminated laid structure; or
c) the base layer (4) is formed as a woven fabric, preferably a stitch-woven fabric, wherein further preferably the woven fabric is formed in a plain weave, in particular a Panama weave, and/or in a twill weave and/or in an atlas weave and/or as a scrim; or
d) the base layer (4) is manufactured from at least 50%, preferably greater than or equal to 80%, in particular preferably 100%, of a biodegradable material and/or compound, in particular a compound with a, preferably recycled, polymer, wherein further preferably the base layer (4) comprises starch and starch derivatives.

3. Wallpaper (1) according to any one of the preceding claims, **characterised in that** the base layer (4) is manufactured from at least 50%, preferably 100%, of a synthetic polymer comprising polyamide and/or polyacrylic and/or polypropylene, in particular of polyester.

4. Wallpaper (1) according to any one of the preceding claims, **characterised in that** the base layer (4) has a basis weight below 200 g/m², in particular between 60 g/m² and 180 g/m², even more preferably between 105 g/m² and 125 g/m².

5. Wallpaper (1) according to any one of the preceding claims, **characterised in that**
the base layer (4) has a longitudinally determinable first elongation value at 100 N and/or a transversely determinable elongation value at 100 N which is less than or equal to 25%, preferably less than or equal to 15% and in particular less than or equal to 7%.

6. Wallpaper (1) according to any one of the preceding claims, **characterised in that** the base layer (4) and/or a textile yarn thread (12) of the base layer (4) and/or an individual textile filament (11) of the base layer (4) has a tensile and/or tearing strength greater than 800 MPa, particularly greater than 1,500 MPa and especially preferably greater than 3,000 MPa.

7. Wallpaper (1) according to any one of the preceding claims, **characterised in that** the base layer (4) has an internal void volume fraction of between 2% and 90%, preferably between 5% and 85%, particularly preferably between 10% and 80% and especially preferably between 20% and 60%.

8. Wallpaper (1) according to any one of the preceding claims, **characterised in that**:
- a first wettability by water and/or by a hydrophilic solvent of the wallpaper paste (2) is better on the wall or ceiling surface (W) than on the base layer (4); and
- a second wettability by a disperse portion of the wallpaper paste (2) is better on the base layer (4) than on the wall or ceiling surface (W),
in particular when the wallpaper (1) is wetted by the wallpaper paste (2) in the liquid or non-set state; and/or
- the first and/or second wettability is or are formed such that a depth of an adhesive joint (H_{Klebefuge}) of the wallpaper paste (2), which forms in the liquid or non-set state between the base layer (4) and the wall or ceiling surface (W), is less than or equal to 100 nm, preferably less than or equal to 10 nm and in particular approx. 1 nm.

9. Wallpaper (1) according to any one of the preceding claims, **characterised in that** the base layer (4) and/or the yarn thread (12) and/or the individual filament (11):
- is printable, in particular by means of digital printing and/or sublimation printing; and/or
- is washable at 40°C, preferably with a washing shrinkage less than or equal to 3%, preferably less than or equal to 1.5%; and/or
- has undergone a specific textile-functional finishing and/or after-treatment during manufacture; and/or
- is formed and/or treated to be anti-mycotic and/or anti-bacterial;
and/or
- is formed to be sound-absorbing.

10. Wallpaper (1) according to any one of the preceding claims, **characterised in that**:
the base layer has at least one first yarn thread (12, 13) extending substantially in a longitudinal direction (X) of the wallpaper (1), where appropriate a warp thread (13) of the woven fabric extending parallel to a selvedge of the wallpaper (1), and a second yarn thread (12, 14) extending substantially in a transverse direction (Y) to the first yarn thread (12, 13), where appropriate a weft thread (14) of the woven fabric; and
the first yarn thread (12, 13) is formed differently from the second yarn thread (12, 14) in at least one textile and/or physical distinguishing parameter, the at least one distinguishing parameter comprising the following parameters of the yarn thread (12) and/or of the individual filament (11) of the yarn thread (12):
- a thickness or diameter (D₁₁, D₁₂); and/or
- a material, in particular a polymer; and/or
- a tearing strength and/or a breaking strength; and/or
- a modulus of elasticity and/or an elongation behaviour; and/or
- a surface tension; and/or
- a wetting angle, in particular by water and/or by the wallpaper paste (2) in the liquid or non-set state; and/or
- a wetting angle, in particular by the disperse portion of the wallpaper paste (2) in the liquid or non-set state and/or in the dried or set state; and/or
- a textile finish and/or after-treatment; and/or
- a printability.

11. Wallpaper (1) according to any one of the preceding claims, **characterised in that** the wallpaper (1) is a one-piece large-scale wallpaper (1) with a rectangular, planar basic shape, in which both side lengths have a length of at least 2 m.

12. Installation set for covering a wall or ceiling surface comprising at least one reusable wallpaper (1) according to any one of the preceding claims, a plurality of installation clips (6), a wallpaper paste (2), a scalpel, an L-profile, a brush and/or a paintbrush (8).

13. Method for providing a wallpaper (1) according to any one of the preceding claims that are directed to the wallpaper (1), **characterised by** at least the following method steps:
Requesting or determining a desired height dimension and a desired width dimension;
customising, in particular cutting to size, a textile semi-finished product (4) to form a sheet-like base layer (4) of the wallpaper (1) with the requested or determined dimensions; and
printing a motif onto the customised base layer (4).

14. Method for providing a reusable wallpaper (1) according to claim 13, **characterised in that** the motif is printed on the customised base layer (4) using the sublimation printing method.

15. Method for providing an installation set (10) for a wallpaper (1) provided by means of a method according to any one of the claims that are directed to the method, **characterised by** at least one of the steps:
providing a defined, calculated quantity of the wallpaper paste (2) on the basis of the requested or determined dimensions of the wall or ceiling surface (W) to be covered; and providing a plurality of installation clips (6).

## Revendications

1. Papier peint (1), qui peut être installé de manière amovible sur une surface au mur ou au plafond (W) au moyen d'une colle à tapisser (2), dans lequel le papier peint (1) présente exclusivement une couche de base (4) de forme plane composée d'un textile, de préférence composée d'une fibre synthétique, qui est installée ou peut être installée sur la surface au mur ou au plafond (W), et ne présente aucun revêtement adhésif appliqué côté fabricant, **caractérisé en ce que**
la couche de base (4) textile présente, pour réduire la surface d'adhésion sur la totalité de sa surface, des trous (5) répartis de manière homogène, en particulier des trous (5) avec une surface de 0,2 à 2,0 mm², de manière préférée de 0,3 à 0,8 mm².

2. Papier peint (1) selon la revendication 1, **caractérisé en ce que**
a) la couche de base (4) est réalisée en tant qu'un tricot, de préférence en tant qu'un tissu à mailles, dans lequel par ailleurs le tricot est réalisé de préférence :
- avec une maille en bâtons ; et/ou
- dans le système à 1 fil ou le système à 2 fils ou le système à 3 fils ; et/ou
- en tant qu'un tissu à mailles en chaîne ; et/ou
- en tant qu'un tissu à mailles piqué ; ou
b) la couche de base (4) est réalisée en tant qu'un non-tissé, de préférence en tant qu'un canevas, de manière davantage préférée en tant qu'un canevas à stratification croisée ; ou
c) la couche de base (4) est réalisée en tant qu'un tissu tissé, de préférence piqué, dans lequel par ailleurs le tissu tissé est réalisé de préférence dans une armure en toile, en particulier une armure Panama, et/ou dans une armure sergée et/ou dans une armure satin et/ou en tant que grille tissée ; ou
d) la couche de base (4) est fabriquée à partir d'au moins 50 %, de préférence de manière égale ou supérieure 80 %, en particulier de manière préférée de 100 %, à partir d'un matériau biodégradable et/ou d'un composé, en particulier d'un composé avec un polymère, de préférence recyclé, dans lequel de manière davantage préférée la couche de base (4) comprend de l'amidon et des dérivés d'amidon.

3. Papier peint (1) selon l'une quelconque des revendications précédentes, **caractérisé en ce que** la couche de base (4) est fabriquée à partir d'au moins 50 %, de manière préférée de 100 %, à partir d'un polymère synthétique comprenant du polyamide et/ou du polyacrylique et/ou du polypropylène, en particulier à partir de polyester.

4. Papier peint (1) selon l'une quelconque des revendications précédentes, **caractérisé en ce que** la couche de base (4) présente un poids surfacique inférieur à 200 g/cm², en particulier entre 60 g/m² et 180 g/m², de manière encore davantage préférée entre 105 g/m² et 125 g/m².

5. Papier peint (1) selon l'une quelconque des revendications précédentes, **caractérisé en ce que**
la couche de base (4) présente une première valeur d'allongement pouvant être définie longitudinalement de l'ordre de 100 N et/ou une valeur d'allongement pouvant être définie de manière transversale de l'ordre de 100 N, qui est inférieure ou égale à 25 %, de préférence inférieure ou égale à 15 % et en particulier inférieure ou égale à 7 %.

6. Papier peint (1) selon l'une quelconque des revendications précédentes, **caractérisé en ce que** la couche de base (4) et/ou un fil filé (12) textile de la couche de base (4) et/ou un filament (11) textile unique de la couche de base (4) présentent une résistance à la traction et/ou à la déchirure supérieure à 800 MPa, en particulier supérieure à 1500 MPa et en particulier de manière préférée supérieure à 3000 MPa.

7. Papier peint (1) selon l'une quelconque des revendications précédentes, **caractérisé en ce que** la couche de base (4) présente une fraction de volume vide intérieure entre 2 % et 90 %, de préférence entre 5 % et 85 %, de manière particulièrement préférée entre 10 % et 80 % et en particulier de manière préférée entre 20 % et 60 %.

8. Papier peint (1) selon l'une quelconque des revendications précédentes, **caractérisé en ce que** :
- une première mouillabilité par de l'eau et/ou par un solvant hydrophile de la colle à tapisser (2) est meilleure sur la surface au mur ou au plafond (W) que sur la couche de base (4) ; et
- une deuxième mouillabilité par une fraction dispersée de la colle à tapisser (2) est meilleure sur la couche de base (4) que sur la surface au mur ou au plafond (W),
en particulier dans l'état mouillé par la colle à tapisser (2), se trouvant dans l'état liquide ou non lié, du papier peint (1) ; et/ou
- la première et/ou la deuxième mouillabilité est réalisée ou sont réalisées de telle sorte qu'une hauteur d'un joint adhésif (H_{Klebefuge}) de la colle à tapisser (2), laquelle se forme dans l'état liquide ou non lié entre la couche de base (4) et la surface au mur ou au plafond (W), est inférieure ou égale à 100 nm, de préférence inférieure ou égale à 10 nm et en particulier est d'environ 1 nm.

9. Papier peint (1) selon l'une quelconque des revendications précédentes, **caractérisé en ce que** la couche de base (4) et/ou le fil filé (12) et/ou le filament (11) unique :
- peuvent être imprimés, en particulier au moyen d'une impression numérique et/ou d'une impression par sublimation ; et/ou
- sont lavables à 40 °C, de préférence avec un rétrécissement au lavage inférieur ou égal à 3 %, de préférence inférieur ou égal à 1,5 % ; et/ou
- ont subi côté fabricant un équipement et/ou traitement ultérieur spécifique fonctionnel sur le plan du textile ; et/ou
- sont réalisés et/ou traités de manière antifongique et/ou de manière antibactérienne ; et/ou
- sont réalisés avec une insonorisation.

10. Papier peint (1) selon l'une quelconque des revendications précédentes, **caractérisé en ce que** :
la couche de base présente au moins un premier fil filé (12, 13) s'étendant sensiblement dans une direction longitudinale (X) du papier peint (1), éventuellement un fil de chaîne (13), s'étendant de manière parallèle à une arête tissée du papier peint (1), du tissu tissé, et un deuxième fil filé (12, 14) s'étendant sensiblement dans une direction transversale (Y) par rapport au premier fil filé (12, 13), éventuellement un fil de trame (14) du tissu tissé ; et
le premier fil filé (12, 13) est différent par rapport au deuxième fil filé (12, 14) dans au moins un paramètre de distinction textile et/ou physique, dans lequel l'au moins un paramètre de distinction comprend des paramètres suivants du fil filé (12) et/ou de l'unique filament (11) du fil filé (12) :
- une épaisseur ou un diamètre (D₁₁, D₁₂) ; et/ou
- un matériau, en particulier un polymère ; et/ou
- une résistance à la déchirure et/ou une résistance à la rupture ; et/ou
- un module d'élasticité et/ou un comportement d'allongement ; et/ou
- une tension de surface ; et/ou
- un angle de mouillage, en particulier par de l'eau et/ou par la colle à tapisser (2) dans l'état liquide ou non lié ; et/ou
- un angle de mouillage en particulier par la fraction dispersée de la colle à tapisser (2) dans l'état liquide ou non lié et/ou dans l'état séché ou lié ; et/ou
- un équipement et/ou traitement ultérieur textile ; et/ou
- une imprimabilité.

11. Papier peint (1) selon l'une quelconque des revendications précédentes, **caractérisé en ce que** le papier peint (1) est un papier peint (1) de grande taille d'un seul tenant avec une forme de base plane rectangulaire, dans laquelle les deux longueurs latérales présentent une longueur d'au moins 2 m.

12. Ensemble de montage pour habiller une surface au mur ou au plafond avec au moins un papier peint (1) réutilisable selon l'une quelconque des revendications précédentes, un nombre d'attaches de montage (6), une colle à tapisser (2), un scalpel, un profil en L, une brosse et/ou un pinceau (8).

13. Procédé pour fournir un papier peint (1) selon l'une quelconque des revendications précédentes axées sur le papier peint (1), **caractérisé par** au moins les étapes de procédé suivantes :
la demande ou la détermination d'une dimension en hauteur souhaitée et d'une dimension en largeur souhaitée ;
l'adaptation, en particulier le découpage, d'un demi-produit textile (4) en une couche de base (4) de forme plane du papier peint (1) avec les dimensions demandées ou déterminées ; et
l'impression d'un motif sur la couche de base (4) adaptée.

14. Procédé pour fournir un papier peint (1) réutilisable selon la revendication 13, **caractérisé en ce que** le motif est imprimé sur la couche de base (4) adaptée dans le procédé d'impression par sublimation.

15. Procédé pour fournir un ensemble de montage (10) pour un papier peint (1) fourni au moyen d'un procédé selon l'une quelconque des revendications axées sur le procédé, **caractérisé par** au moins une des étapes :
de fourniture d'une quantité calculée définie de la colle à tapisser (2) sur la base de la dimension demandée ou déterminée de la surface au mur ou au plafond (W) à habiller ; et de fourniture d'un nombre d'attaches de montage (6).
